# EUROPEAN PATENT APPLICATION

(11) **EP 0 740 296 A2**
(43) Date of publication of application: **30.10.1996**
(21) Application number: 96106657.8
(22) Date of filing: 26.04.1996
(51) Int. Cl.: G11B 11/10

(54) **Magneto-optical recording media**

(30) Priority: 26.04.1995 JP 127095/95; 31.08.1995 JP 224387/95; 22.11.1995 JP 304345/95; 24.11.1995 JP 329915/95; 30.11.1995 JP 313148/95
(71) Applicant: SANYO ELECTRIC CO. LTD, Moriguchi-City, Osaka 570 (JP)
(72) Inventor: Tanase, Kenji 10-1, Beppu, Motosu-gun Gifu (JP); Suzuki, Yoshihisa 28-2, Yasu, Aichi (JP); Yamaguchi, Atsushi, Gifu (JP)
(74) Representative: Glawe, Delfs, Moll & Partner

(57) **Abstract**

The magneto-optical recording medium comprising of a transparent polycarbonate substrate, an interference layer made of SiN, a reading layer made of GdFeCo, a recording layer made of TbFeCo, an oxidation preventing layer made of SiN, a irradiation layer made of Al and an ultraviolet setting plastic layer is disclosed. The each layer is deposited to a suitable thickness in this order on the transparent polycarbonate substrate. The contents of each element in the reading layer and the recording layer is set to a suitable value to achive a good characteristic. High recording and reading density is achieved.

## Description

### BACKGROUND OF THE INVENTION

### Field of the Invention:

The present invention generally relates to magneto-optical recording media and recording and reading methods for such media. More particularly, the present invention relates to an magneto-optical recording medium having an exchange-coupled magnetic layer composed of a recording layer, which is a perpendicular magnetization film, and a reading layer, which is an in-plane magnetization film at the room temperature, and has achieved a high recording density by being so arranged that the direction of magnetization of the recording layer is copied into the reading layer when a recorded signal is read from the medium.

### Description of the Related Art:

The magneto-optical recording medium has drawn attention as a recording medium which is rewritable, large in storage capacity and high in reliability. For this reason, the use of this medium as a computer storage, for example, has begun. However, due to the increase in information volume and the downsizing of related hardware, this medium is wanted to have higher recording and reading density.

The high density recording and reading technology consists of technology on the hardware side and technology on the medium side. The former includes a technique for utilizing optical super-resolution phenomenon to stop down the spot diameter of the laser beam down to below the diffraction limits of the laser beam and a technique for manufacturing the laser diode which outputs a laser beam of shorter wavelength. The latter includes a technique for forming the track of narrow pitch on the recording medium and a technique for improving the resolution of reading by utilizing a magnetic multilayer film.

Here, the technique for improving the resolution of reading by utilizing the magnetic multilayer film is based on the fact that the temperature distribution of a laser spot is the most concentrated at and around the center of the laser spot, constituting the Gaussian distribution. That is, by utilizing this fact, the state of the recording layer at and around the center of the laser spot is copied into the reading layer, and then the state of the reading layer is read.

In the magneto-optical recording medium utilized in the conventional optical super-resolution technique, generally the recording layer, which is a perpendicular magnetization film has been utilized. As a substrate for the conventional magneto-optical recording medium, generally a glass substrate has been used.

The recording of a signal into the magneto-optical recording medium having a recording layer and a reading layer is achieved by raising the temperature of a target domain of the reading layer to the Curie temperature thereof or higher by focusing a laser beam spot onto the domain, then lowering the temperature of that domain, and aligning the direction of magnetization of that domain with the direction of the applied external magnetic field, and then further lowering the temperature of that domain to copy the direction of magnetization of that domain into an corresponding domain of the recording layer. This means that the recording is performed by thermal magnetic method, and therefore the magnetic-temperature characteristics and composition of each layer effect on the recording characteristics. Here, at the room temperature, the magnetization of the reading layer has in-plane direction.

In order to raise the temperature of the target domain of the reading layer to the Curie temperature or higher, the laser power should be increased. If the heating is insufficient, the CNR of the recording signal degrades. On the other hand, in order to align the direction of magnetization of the reading layer whose heating is insufficient with the direction of the external magnetic field, a strong magnetic field should be applied. However, even if a strong magnetic field is applied, it is impossible to prevent the degradation in the CNR of the recording signal. To add, in the magnetic modulation type recording, a small magnetic field should preferably be applied.

If the Curie temperature of the recording layer is so low as to have a large difference from the Curie temperature of the reading layer, in the temperature falling process of the recording, when the temperature becomes lower than the Curie temperature of the recording layer and the direction of the magnetization of the reading layer begins to be copied to the recording layer, a part of magnetization of the reading layer has already begun to take the in-plane direction. This causes the noise of the signal to be copied from the reading layer into the recording layer, and therefore there is a problem that the CNR of the recording signal falls.

The reproduction of the information from the magneto-optical recording medium having a recording layer and a reading layer is based on the fact that the temperature distribution of a laser spot is the most concentrated at and around the center of the laser spot, constituting the Gaussian distribution. By utilizing this fact, the state of the recording layer at the center of the laser spot is copied into the reading layer, and the state of the reading later is read. In such reading method, it is requested that the temperature distribution of the reading layer whose temperature is raised by the laser spot should be in a desired distribution. This is because if such temperature distribution fails to be the desired distribution, noise caused by disordered direction of magnetization or crosstalk noise caused by excessive reading as far as the circumferential low temperature area of the center of the laser spot increases.

In an magneto-optical recording medium of laser passing type in which the laser beam passes through the magnetic layer, the heat accumulation by the laser beam is negligible. However, in an magneto-optical recording medium of laser reflecting type in which the laser beam is reflected by the magnetic layer, the thickness of the magnetic layer is 400Å or more, for example, and the accumulated heat has an effect on the temperature distribution of the reading layer. Therefore, there is a problem that such noise described above increases.

Furthermore, as recording in the conventional magneto-optical recording medium is made by irradiating laser beam of a certain intensity, the temperature rise area of the recording layer is larger than the diameter of the laser spot. As a result, there is a problem that the recording spot is so large that increasing the density is difficult.

In addition, when a glass substrate is used as a substrate, there are problems that the weight of the magneto-optical recording medium is heavy, the magneto-optical recording medium may be damaged when it is dropped, the magneto-optical recording medium is not suitable to a high-speed revolution, the necessity of surface polishing raise the manufacturing cost, an guide groove for use in tracking a laser beam can not easily be formed direct, etc.

Moreover, according to the conventional CAD method, change from the in-plane magnetization film into the perpendicular magnetization film within the reading layer is occured within a wide range of temperature from several 10° C to near 100° C, and the magnetization of the recording layer effects to the reading layer to disturb the in-plane magnetization of the reading layer, and the mask effect degraded. Therefore, the copying area is not clear, reading noise is large, and the MSR effect can not be obtained so much. To add, as there is no clear threshold value for copying, the copying temperature is likely to depend on the material manufacturing conditions. Therefore, uniform characteristics can not be obtained.

### SUMMARY OF THE INVENTION

It is an object of the present invention for an magneto-optical recording medium of such type that detects reflected laser beam from the magnetic layer to reduce the noise described above by making the heat accumulation negligible.

It is another object of the present invention to provide an magneto-optical recording medium which can record even if the application magnetic field is small and can suitably be used for the magnetic field modulation mode.

It is still another object of the present invention to provide an magneto-optical recording medium which can record with a good CNR.

It is also an object of the present invention to provide an magneto-optical recording medium which can achieve high-density recording and reading by limiting the area which is heated to a certain temperature in recording and reading.

It is also an object of the present invention to provide an magneto-optical recording medium which can simply and easily be handled.

It is still also an object of the present invention to provide an magneto-optical recording medium which has a clear copying temperature, a low reading noise, a large MSR effect and a high uniformity by providing the magnetic copying function not to the reading layer but to the recording layer itself.

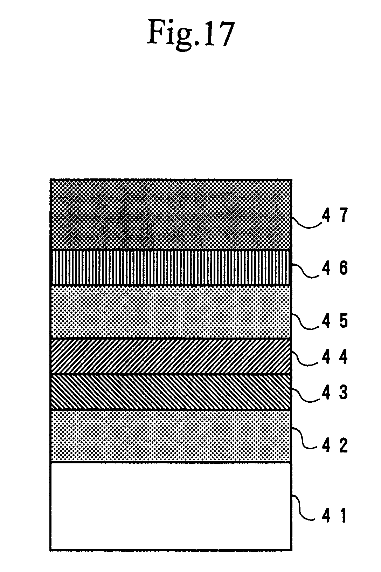

These objects can be achieved by forming an magneto-optical recording medium according to the present invention to comprise a transparent substrate 41, an interference layer 42, a reading layer 43, a recording layer 44, a protection layer 45, a radiation layer 46 and an ultraviolet setting plastic layer 47, as shown in FIG. 17, and designing the each layers to have better characteristics.

### BRIEF DESCRIPTION OF THE DRAWINGS

FIG. 1 is a schematic illustrating the cross-sectional view of an magneto-optical recording medium according to the first and second examples;
FIG. 2 is a graph illustrating the remanence Kerr rotation angle of the recording layer and reading layer of the magneto-optical recording medium of the first example with temperature taken as abscissa;
FIG. 3 is a graph illustrating the relations between laser power and noise when the magneto-optical recording medium of the first example is in recording;
FIG. 4 is a graph illustrating the relations between external magnetic field and noise when the magneto-optical recording medium of the first example is in recording;
FIG. 5 is a graph illustrating the remanence Kerr rotation angle of the recording layer and reading layer of the magneto-optical recording medium of the second example with temperature taken as abscissa;
FIG. 6 is a graph illustrating the relations between external magnetic field and CNR when the magneto-optical recording medium of the first example [B] and a conventional magnetic recording medium [A] are in recording;
FIG. 7 is a schematic illustrating the cross-sectional view of an magneto-optical recording medium according to the third example;
FIG. 8 is a graph illustrating the CNR of the reading signal of the magneto-optical recording medium according to the third examples;
FIG. 9 is a schematic illustrating the cross-sectional view of an magneto-optical recording medium according to the fourth example;
FIG. 10 is a schematic illustrating the cross-sectional view of an magneto-optical recording medium according to the fifth example;
FIG. 11 is a schematic illustrating the cross-sectional view of an magneto-optical recording medium according to the sixth example through fourteenth example;
FIG. 12 is a graph illustrating the remanence Kerr rotation angle of the recording layer and reading layer of the magneto-optical recording medium of the sixth example and conventional magneto-optical recording medium with temperature taken as abscissa;
FIG. 13 shows graphs illustrating the Kerr loops near the vicinity of the Curie temperature of the magneto-optical recording medium according to the sixth example and conventional magneto-optical medium;
FIG. 14 is a graph illustrating the magnetic modulation recordings according to the sixth example and a prior art;
FIG. 15 shows observation views of the surfaces of interference layers 2 of the sixth example and seventh example obtained through an interatomic force microscope;
FIG. 16 is a graph illustrating the CNR of the reading signal for the external magnetic field according to the sixth example and seventh example;
FIG. 17 is a schematic illustrating the cross-sectional view of an magneto-optical recording medium according to the present invention;
FIG. 18 is a process flow chart of the magneto-optical recording medium according to the present invention;
FIG. 19 is a view illustrating an injection molding machine for a transparent polycarbonate substrate of the magneto-optical recording medium according to the present invention;
FIG. 20 is a chart illustrating the relations between modulated external magnetic field and pulse laser in the magneto-optical recording medium according to the embodiment of the present invention;
FIG. 21 is a block diagram illustrating a recording circuit for magneto-optical recording medium according to the embodiment of the present invention;
FIG. 22 is a graph qualitatively illustrating the effect of forming the radiation layer according to the present invention and utilizing a pulse laser according to the embodiment of the present invention;
FIG. 23 is a graph illustrating the relations between the phase difference (between pulse magnetic field and a pulse laser) when the magneto-optical recording medium according to the examples of the present invention is in recording and the CNR when the same is in reading;
FIG. 24 is a graph illustrating the relations between the phase difference (between pulse magnetic field and a pulse laser) when the magneto-optical recording medium according to the examples of the present invention is in recording and the CNR when the same is in reading;
FIG. 25 is a graph illustrating the relations between the CNR and the reading power when the magneto-optical recording medium according to the examples of the present invention is in reading;
FIG. 26 is a graph illustrating the effect of the radiation layer of the magneto-optical recording medium according to the present invention;
FIG. 27 shows the injection molding conditions of the transparent polycarbonate substrate of the magneto-optical recording media according to the present invention;
FIG. 28 shows the characteristics of the transparent polycarbonate substrate of the magneto-optical recording medium according to the present invention;
FIG. 29 shows the forming conditions of an Al film according to the present invention;
FIG. 30 shows the forming conditions of a recording layer according to the present invention;
FIG. 31 shows the forming conditions of a reading layer according to the present invention;
FIG. 32 shows the recording conditions onto the magneto-optical recording medium according to the present invention;
FIG. 33 shows the reading conditions from the magneto-optical recording medium according to the present invention;
FIG. 34 shows the forming conditions of the SiN film according to the present invention;
FIG. 35 shows the relations between Al film thickness and the reading resolution of the examples according to the present invention;
FIG. 36 is a cross-sectional view of an magneto-optical recording medium according to the ninteenth example;
FIG. 37 is a graph illustrating the characteristics of a recording layer according to the nineenth example;
FIG. 38 is a schematic illustrating the ninteenth example in reading;
FIG. 39 is a schematic illustrating the ninteenth example in reading;
FIG. 40 is a graph illustrating the CNR of the reading signal for the external magnetic field according to the sixth example and eighth example;
FIG. 41 is a graph illustrating the CNR of the reading signal for the reading laser power according to the eighth example and ninth example;
FIG. 42 is a graph illustrating the CNR of the reading signal for the recording laser power according to the ninth example and tenth example;
FIG. 43 is a graph illustrating the CNR of the reading signal for the reading laser power according to the tenth and eleventh examples;
FIG. 44 is a graph for use in comparison of the surface smoothness by changing the etching power as to the etching processing to the surface of the interference layer 2;
FIG. 45 is a graph illustrating the CNR of the reading signal for domain length according to the eleventh example and twelfth example;
FIG. 46 is a graph illustrating the measurements of the CNR of the reading signal for the thickness of an Al radiation layer when the Al radiation layer is provided on the protection layer 5 of the magneto-optical recording medium according to the twelfth example;
FIG. 47 is a graph illustrating the CNR of the reading signal for the reading laser power according to the eleventh and fourteenth example;
FIG. 48 is a graph illustrating the temperature characteristics of the Kerr rotation angle; and
FIG. 49 shows the film forming conditions of the recording layer, reading layer and protection layer according to the ninteenth example.

### DETAILED DESCRIPTION OF THE PREFERRED EMBODIMENT

### (1) First Example

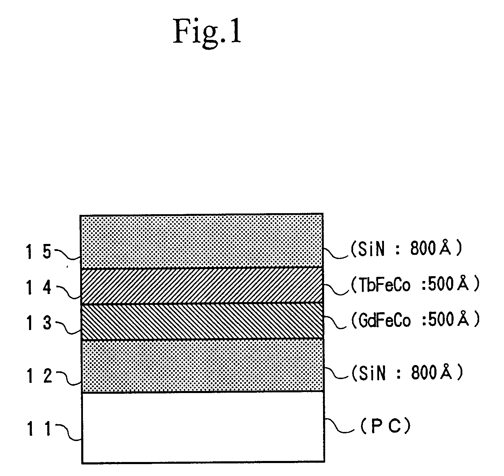

FIG. 1 is a schematic illustrating the cross-sectional structure of an magnet-optical recording medium according to the first eaample and second example.

The magneto-optical recording medium in FIG. 1 consists of a polycarbonate (PC) substrate 11, and a deposit of an interference layer 12 of 800Å thick made of SiN, a reading layer 13 of 500Å thick made of GdFeCo, a recording layer 14 of 500Å thick made of TbFeCo, and an oxidation preventing layer 15 of 800Å thick made of SiN deposited in this order on the PC substrate 11, and further an ultraviolet setting plastic layer (not illustrated) is provided on top of the oxidation preventing layer 15 by way of application to a thickness of approximately 20µm as a protection layer. Here, each layer illustrated can be formed by conventionally and publicly known sputtering method or the like.

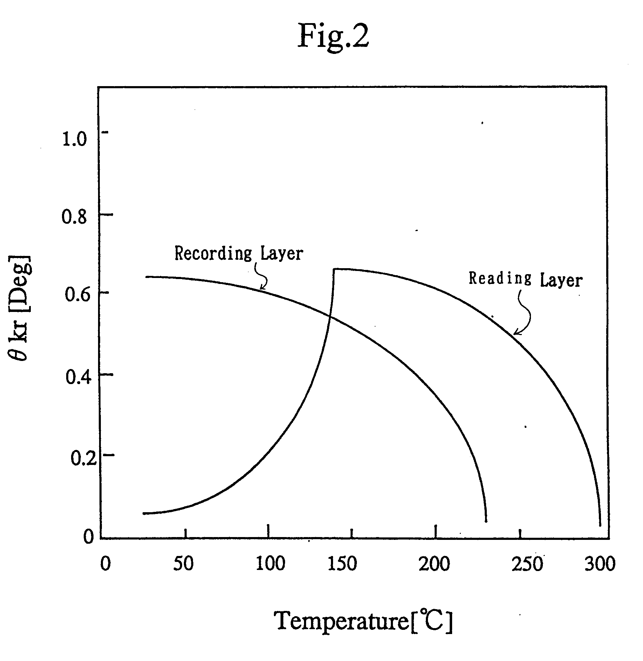

The composition of the reading layer 13 is "Gd : Fe : Co = 31 : 47 : 22at%," while the composition of the recording layer 14 is "Tb : Fe : Co = 26 : 66 : 8at%." The results of the measurement of the remanence Kerr rotation angles of the recording layer 14 and reading layer 13 are illustrated in FIG. 2 with temperature taken as abscissa. As illustrated, the temperature at which the reading layer 13 becomes a perpendicular magnetization film is ca. 140° C, and the Curie temperature of the reading layer 13 is ca. 300° C. The Curie temperature of the recording layer 14 is ca. 230° C, and the compensation temperature of the recording layer 14 is the room temperature. Reading is achieved by raising the temperature of the target domain of the reading layer 13 to a copying temperature of ca. 140° C described above and copying the direction of magnetization of the same domain of the recording layer 14 to the reading layer 13 and reading the same domain from the reading layer 13.

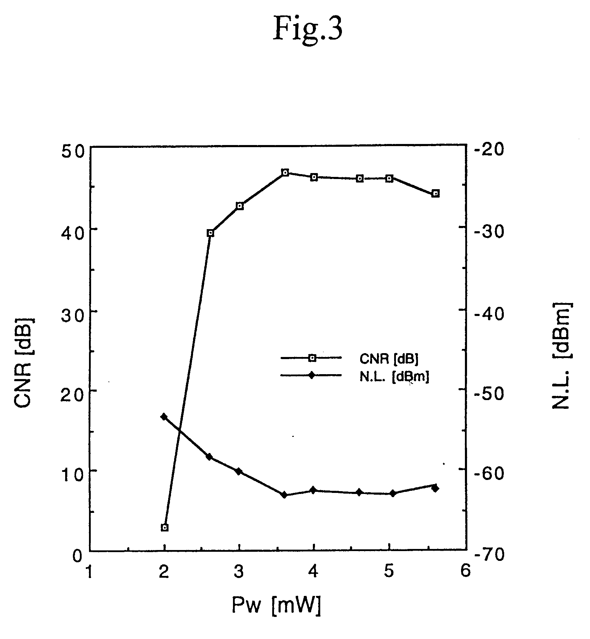

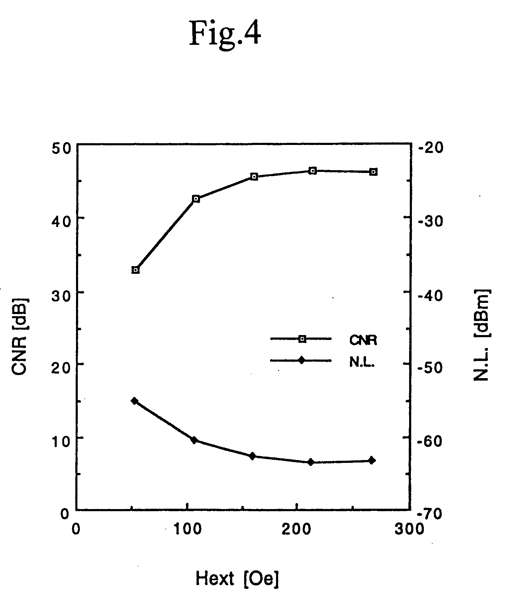

In recording, as illustrated in FIG. 3, the CNR saturates when the laser power is 3.5 [mW] or more, and at this time, the reading layer 13 is at the Curie temperature or higher. For this reason, as illustrated in FIG. 4, recording can be performed when a low external magnetic field such as 50 [Oe] is applied, and at 200 [Oe] or more, the CNR is saturated. Considering that conventionally the application of an external application magnetic field of 500 [Oe] or more has been necessary for recording (Optical Data Storage 1994, Technical Digest Series, vol. 10, pp. 128-129), it can be understood that the magneto-optical recording medium of this example can be recorded by applying an extremely small external magnetic field.

### (2) Second Example

The cross-sectional view of the second example is the same as that of the first example. The second example differs from the first example in that the composition of the reading layer 13 is "Gd : Fe : Co = 31 : 44 : 25at%" and the composition of the recording layer 14 is "Tb : Fe : Co = 26 : 59 : 15at%."

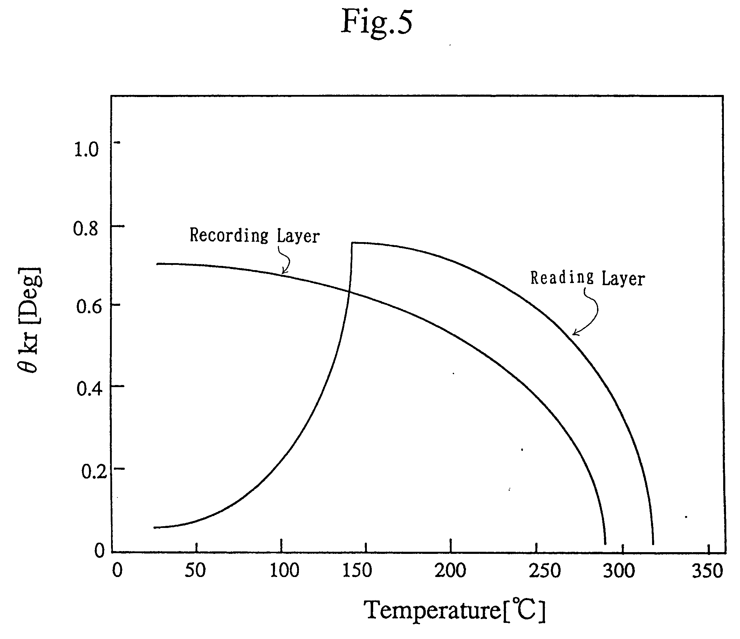

The temperature characteristics of the remanence Kerr rotation angles of the recording layer 14 and reading layer 13 of the above-described compositions, respectively, are illustrated in FIG. 5. As illustrated in this figure, the temperature at which the reading layer 13 becomes a perpendicular magnetization film is ca. 140° C and the Curie temperature of the reading layer 13 is ca. 320° C. On the other hand, the Curie temperature of the recording layer 14 is ca. 290° C, and the compensation temperature thereof is the room temperature. This means that the difference in the Curie temperature between the recording layer 14 and the reading layer 13 is as small as about 30° C. For this reason, when the temperature falls below the Curie temperature of the recording layer 14 in the temperature fall process in the recording, as the temperature is sufficiently higher than the copying temperature of the reading layer 13, the magnetized direction of the reading layer 13 is still perpendicular. That is, in the reading layer 13, there is no part that the magnetized direction is the in-plane direction. Therefore, the direction of the magnetization to be copied from the reading layer 13 into the recording layer 14 is also perpendicular, and therefore the CNR is good.

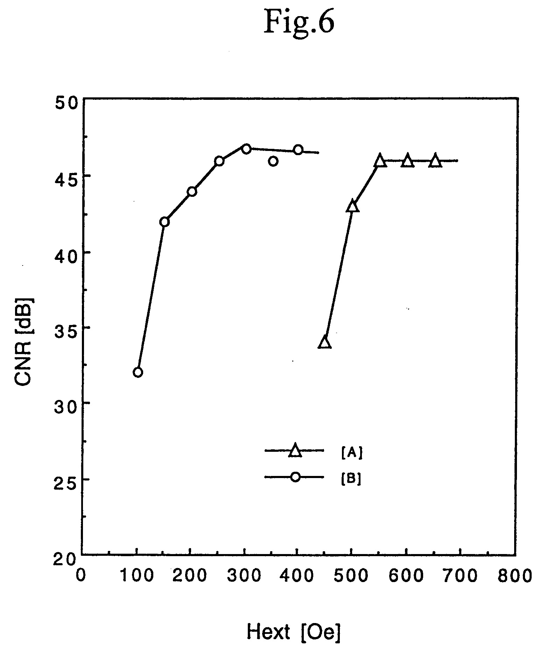

In the case of the second example, as illustrated as [B] in FIG. 6, recording can be performed when a low external magnetic field such as 100 [Oe] is applied, and the CNR is saturated at a CNR of 250 [Oe] or more. Incidentally, [A] in this figure refers to the characteristics of the conventional magneto-optical recording medium with the reading layer 13 being composed of "Gd : Fe : Co = 31 : 34 : 35at%" and having the Curie temperature of ca. 360° C and the recording layer 14 being composed of "Tb: Fe : Co = 26 : 66 : 8at%" and having the Curie temperature of ca. 230° C. As illustrated in this figure, in the case of the conventional magneto-optical recording medium, recording can be performed when an external magnetic field of 500 [Oe] or more is applied. Compared with this conventional magneto-optical recording medium, it is understood that the magneto-optical recording medium according to this example can be recorded by applying an extremely small external magnetic field.

### (3) Third Example

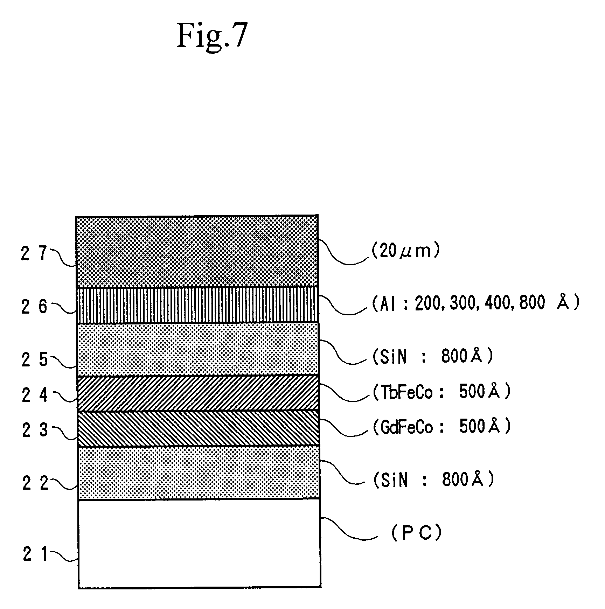

FIG. 7 is a schematic illustrating the cross-sectional structure of the magneto-optical recording medium according to the third example.

The magneto-optical recording medium illustrated in this figure is composed of a polycarbonate (PC) substrate 21 and a deposit of a high refraction layer 21 of 800Å thick made of SiN, a reading layer 23 of 500Å thick made of GdFeCo, a recording layer 24 of 500Å thick made of TbFeCo, an oxidation preventing layer 25 of 800Å thick made of SiN of, and a radiation layer 26 of 200Å thick made of Al on the substrate 21 in this order, and further a protection layer 27 of approximately 20µm thick made of ultraviolet setting plastic is applied on the deposit by way of application. Each layer other than the protection layer 27 can be formed by the conventionally and publicly known sputtering method or the like.

In addition to the above, another magneto-optical recording media were manufactured by varying the film thickness of the Al radiation layer 26 to 200Å, 300Å, 400Å and 800Å. As the exchange-coupled magnetic layer, which is composed of the recording layer 24 and the reading layer 23, has a total film thickness of 1000Å, any of these magneto-optical recording media is such a type that does not sufficiently transmit the laser beam, i.e., that detects the reflected laser beam from the magnetic layer. In the reading, the direction of the magnetization of the target domain of the recording layer 24 is copied into the reading layer 23.

In each of the magneto-optical recording media described above, when the temperature of a target domain of the reading layer 23 is raised by focusing the laser spot onto the target domain through the substrate 21, the direction of the magnetization of a corresponding domain of the recording layer 24 is copied into an area where the temperature of the reading layer 23 has exceeded its copying temperature (140° C for the third examples). By making use of this phenomenon, the information is read from the recording layer 24. Here, however, as the temperature at which the spontaneous magnetization of the recording layer 24 is demagnetized is ca. 250° C, the information in the recording layer 24 is held at the copying temperature described above.

Furthermore, in this example, the copying temperature of 140° C of the reading layer 23 and the temperature of 400° C at which the spontaneous magnetization direction of the reading layer 23 is demagnetized are achieved by setting the composition to "Gd : FeCo = 32 : 68at%," and the temperature of 250° C at which the spontaneous magnetization direction of the recording layer 24 is demagnetized are achieved by setting the composition to "Tb : FeCo = 25 : 75at%."

The recorded information was read from each of the magneto-optical recording media (only the thickness of the radiation layer 26 differs from each other as 200Å, 300Å, 400Å and 800Å), the CNR of each magneto-optical recording medium was measured, and the results were compared with the conventional recording medium (a recording medium with no radiation layer 26 in FIG. 7), each of the magneto-optical recording media of the third examples was proved to be better than the conventional recording medium. Then, in comparison with among the magneto-optical recording media of the third examples, that of 300Å in the thickness of the radiation layer 26 was better than that of 200Å in the thickness of the radiation layer 26, but those of 300Å, 400Å and 800Å in the thickness of the radiation layer 26 were proved to be almost the same. From these results, it is understood that the thickness of the Al radiation layer 26 is good with 200Å but preferable with 300Å or more.

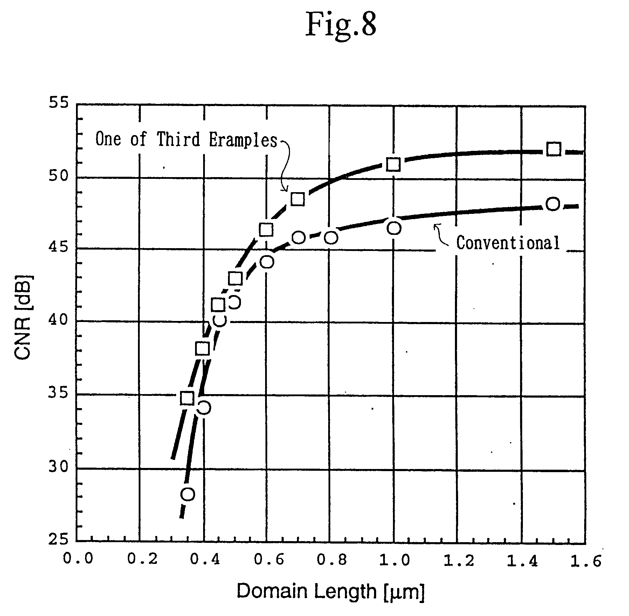

FIG. 8 is a graph illustrating the CNR of the reading signal of the magneto-optical recording medium according to one of the third examples (thickness of the radiation layer 26: 400Å) and the conventional magneto-optical recording medium with the recording domain length taken as abscissa. As illustrated in this figure, it is understood that improvements are conspicuous when the recording domain lengths are 0.8µm or more and 0.4µm or less. This is presumably because the heat of the reading layer 23 flows to the radiation layer 26, thereby the temperature distribution is improved, and as a result, noise due to the disorder of the direction of the magnetization or the reading as far as the circumferential area of the laser spot (where the temperature is low) is reduced.

In the structure of the third examples illustrated in FIG. 7, two or more recording media were prepared by changing the composition ratio of the reading layer 23 from Gd = 30at% (the copying temperature at this case is approximately 70° C) to Gd = 33at% (the copying temperature at this case is approximately 160° C), and the CNR was measured in the same way as described above, and the same results were obtained.

Furthermore, instead of Al, other materials of Ag, Cu, Au, W and Mg, having a high thermal conductivity, were used, and the similar results to the above were obtained.

### (4) Fourth Example

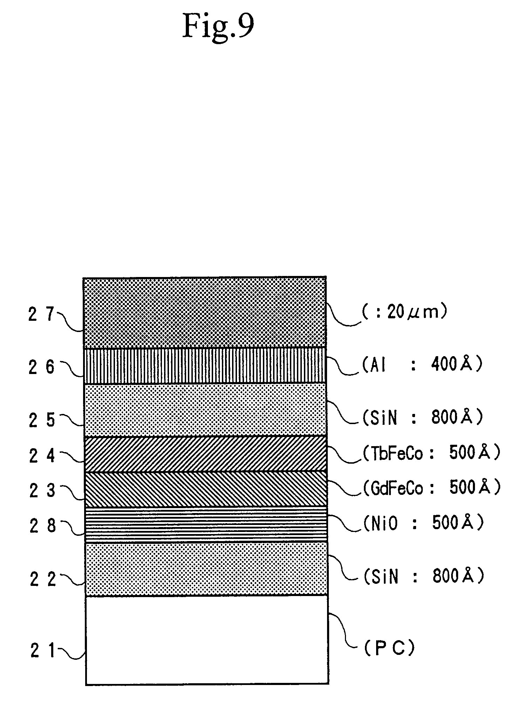

FIG. 9 is a schematic illustrating the cross-sectional structure of an magneto-optical recording medium according to the fourth example.

The magneto-optical recording medium according to the fourth example is different from that of the third examples only in that a magnetic layer 28, which is an in-plane magnetization film, made of NiO of 500Å thick is provided between a high refraction layer 22 made of SiN and a reading layer 23 made of GdFeCo; any other part of the structure is the same as that of the third examples. Here, the radiation layer 26 is made of Al to a thickness of 400Å.

The in-plane magnetization film magnetic layer 28 is a layer in which the direction of the magnetization is in parallel with the layer surface within a range from the room temperature to the Neel temperature (100° C in this example). Furthermore, as the magnetic layer 28 is made of NiO to a thickness of 500Å, the magnetic layer 28 is sufficiently transparent to transmit the laser beam reflected from the reading layer 23 to the substrate 21.

This magnetic layer 28 is provided to improve the CNR of the reading signal by aligning the initial direction of the magnetization of the reading layer 23 parallel to the magnetic layer 28. That is, the initial direction of the magnetization of the reading layer 23 can not completely become the in-plane direction due to an effect that the recording layer 24 is a perpendicular magnetization film and is magnetically coupled to the reading layer 23. However, when the direction of the magnetization of the reading layer 23 changes from the in-plane direction to the perpendicular direction, the initial state of the reading layer 23 has an effect on this process of magnetization direction change. Considering this fact, an in-plane magnetization film magnetic layer 28 is provided to reduce noise due to the disordered direction of the magnetization or crosstalk noise due to the excessive reading as far as the signal from the low-temperature area.

The effect of the in-plane magnetization film magnetic layer 28 described above can further be heightened by properly selecting the Curie temperature or the Neel temperature. Here, as a material for the in-plane magnetization film magnetic layer 28, other than NiO described above, CoNiO, CoO, MnFe, FeCr, FeNi, MnNi, PtCo and PdCo may be used.

The CNR of the reading signal of the magneto-optical recording medium according to the fourth example was measured in the same way as the measurement of the CNR of the third examples, and a good CNR was obtained. Then, when a recording medium with no radiation layer 26 in FIG. 9 was prepared, and the CNR was compared with this fourth example. As a result, the CNR of the recording medium of the fourth example was better than that of the recording medium with no radiation layer 26.

### (5) Fifth Example

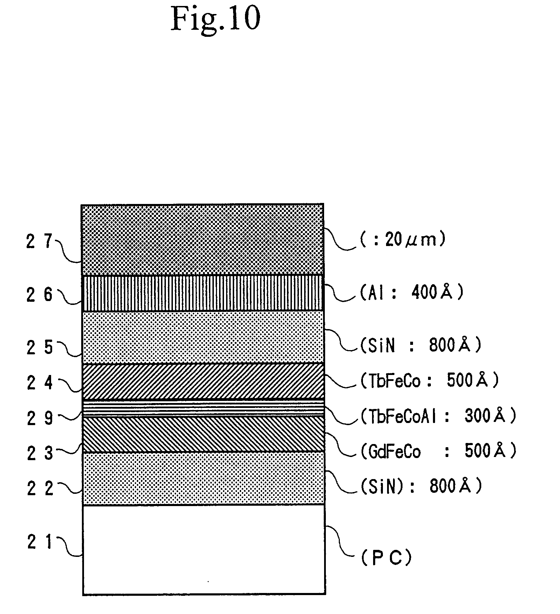

FIG. 10 is a schematic illustrating the cross-sectional structure of an magneto-optical recording medium according to the fifth example.

The magneto-optical recording medium according to the fifth example is different from the fourth example only in that the in-plane magnetization film magnetic layer 28 made of NiO is not provided and a cut-off magnetization layer 29 of 300Å thick made of TbFeCoAl is provided between a reading layer 23 made of GdfeCo and a recording layer 24 made of TbFeCo; any other part of the structure is the same as that of the fourth example. Here, Al of 400Å thick is used as a radiation layer 26 in the same way as the fourth example.

In the case of the cut-off magnetization layer 29 described above, the temperature at which spontaneous magnetization is demagnetized is 190° C, which is a temperature set lower than that at which the spontaneous magnetization of the recording layer 24 is demagnetized. In this example, the temperature of 190° C described above is achieved by setting the Al content to 17at%.

This cut-off magnetization layer 29 is designed to protect the recording of the information into the recording layer 24 from the effect of the thermal magnetic characteristics of the reading layer 23. That is, when the area whose temperature is raised by the irradiation of the laser spot of recording power falls to 250° C (the temperature at which the spontaneous magnetization of the recording layer 24 is demagnetized) or less in the temperature reducing process, as the magnetization of the cut-off magnetization layer 29 is 0 at this 250° C, the magnetized direction of the recording layer 24 is in the direction of the external magnetic field independently from the reading layer 23. When the temperature further falls to 190° C (the temperature at which the spontaneous magnetization of the cut-off magnetization layer 29 is demagnetized) or less, the direction of the magnetization of the cut-off magnetization layer 29 follows the direction of the magnetization of the recording layer 24. Therefore, when the copying temperature in reading is a little more than 140° C, which is under 190° C, the cut-off magnetization layer 29 behaves in the same way as the recording layer 24. Here, as a material for the cut-off magnetization layer 29, in addition to TbFeCoAl described above, TbFeCoNb, TbFeCoCr and TbFeCoNi may be used.

The CNR of the reading signal of the magneto-optical recording medium according to the fifth example was measured in the same way as the measurement of the CNR of the third examples, and a good CNR was obtained. Then, when a recording medium with no radiation layer 26 in FIG. 10 was prepared, and the CNR was compared with this fifth example. As a result, the CNR of the recording medium of the fifth example was better than that of the recording medium with no radiation layer 26.

### (6) Sixth Example - Fourteenth Example

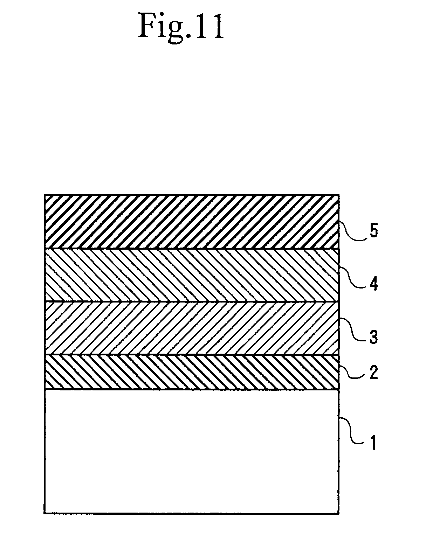

Now, the sixth example through fourteenth example will be described. The cross-sectional structure of magneto-optical recording media according to the sixth example through fourteenth example is illustrated in FIG. 11. Specifically, on a polycarbonate (PC) transparent substrate 1 is formed a deposit of an interference layer 2 made of SiN, a reading layer 3 made of GdFeCo, a recording layer 4 made of TbFeCo and a protection layer 5 made of SiN in this order. This structure can be made by the conventionally and publicly known sputtering method or the like. In the thirteenth example, on the protection layer 5 is formed a radiation layer (not illustrated) of 200Å thick made of Al.

### (6-1) composition

Firstly, the composition, etc. of an example for comparison, and the sixth example through the fourteenth example will be described.

### (6-1-1) an example for comparison

In the comparison example, the interference layer 2 is formed to a thickness of 800Å, the reading layer 3 is formed to a thickness of 500Å, the recording layer 4 is formed to a thickness of 500Å and the protection layer 5 is formed to a thickness of 800Å.

The composition of the reading layer 3 is Gd : Fe : Co = 23 : 65.5 : 11.5at%. The composition of the recording layer 4 is Tb : Fe : Co = 26 : 66 : 8at%.

### (6-1-2) Sixth Example

In the sixth example, the interference layer 2 is formed to a thickness of 800Å, the reading layer 3 is formed to a thickness of 500Å, the recording layer 4 is formed to a thickness of 500Å and the protection layer 5 is formed to a thickness of 800Å.

The composition of the reading layer 3 is Gd : Fe : Co = 31 : 46 : 23at%. The composition of the recording layer 4 is Tb : Fe : Co = 26 : 66 : 8at%.

That is, the sixth example is different from the comparison example in the composition of the reading layer 3.

### (6-1-3) Seventh Example

The seventh example is the same as the sixth example in the film thicknesses of the interference layer 2, reading layer 3, recording layer 4 and protection layer 5, and the compositions of the reading layer 3 and recording layer 4.

The seventh example is different from the sixth example in that the interference layer 2 is formed, then the surface thereof is etched, and then the reading layer 3 is formed.

The etching conditions are a sputtering gas pressure of 1.2 mTorr for a backward sputtering, a power supply of 100W and an etching time of 20 min.

### (6-1-4) Eighth Example

The eighth example is the same as the sixth example in the film thicknesses of the reading layer 3, recording layer 4 and protection layer 5, and the compositions of the reading layer 3 and recording layer 4.

The eighth example is different from the sixth example in that the thickness of the interference layer 2 is 700Å.

### (6-1-5) Ninth Example

The ninth example is the same as the eighth example in the film thicknesses of the interference layer 2, recording layer 4 and protection layer 5, and the compositions of the reading layer 3 and recording layer 4.

The ninth example is different from the eighth example in that the thickness of the reading layer 2 is 1000Å.

### (6-1-6) Tenth Example

The tenth example is the same as the ninth example in the film thicknesses of the interference layer 2, reading layer 3, recording layer 4 and protection layer 5, and the composition of the reading layer 3.

The tenth example is different from the ninth example in that the composition of the recording layer 4 is Tb : Fe : Co = 25 : 62 : 13at%.

### (6-1-7) Eleventh Example

The eleventh example is the same as the tenth example in the film thicknesses of the interference layer 2, reading layer 3, recording layer 4 and protection layer 5, and the composition of the recording layer 4.

The eleventh example is different from the tenth example in that the composition of the reading layer 3 is Gd : Fe : Co = 34 : 44 : 22at%.

### (6-1-8) Twelfth Example

The twelfth example is the same as the eleventh example in the film thicknesses of the interference layer 2, reading layer 3, recording layer 4 and protection layer 5, and the compositions of the reading layer 3 and recording layer 4.

The twelfth example is different from the eleventh example in that the interference layer 2 is formed, then the surface thereof is etched, and then the reading layer 3 is formed.

The etching power is 0.05W/cm².

### (6-1-9) Thirteenth Example

The thirteenth example is the same as the twelfth example in the film thicknesses of the interference layer 2, reading layer 3, recording layer 4 and protection layer 5, and the compositions of the reading layer 3 and recording layer 4, and in that the surface of the interference layer 2 is etched by an etching power of 0.05W/cm² and then the reading layer 3 is formed.

The thirteenth example is different from the twelfth example in that on the protection layer 5 is formed a radiation layer made of Al to a thickness of 200Å.

### (6-1-10) Fourteenth Example

The fourteenth example is the same as the eleventh example in the film thicknesses of the interference layer 2, reading layer 3, recording layer 4 and protection layer 5, and the compositions of the reading layer 3 and recording layer 4

The fourteenth example is different from the eleventh example in that the sputtering gas pressure for the formation of the reading layer 3 is 3.5 mTorr while that of the eleventh example is 7 mTorr.

### (6-2) Characteristics

Now, various characteristics of the magneto-optical recording media according to the comparison example and the sixth example through the fourteenth example described above will be described.

### (6-2-1) Sixth Example to Comparison Example

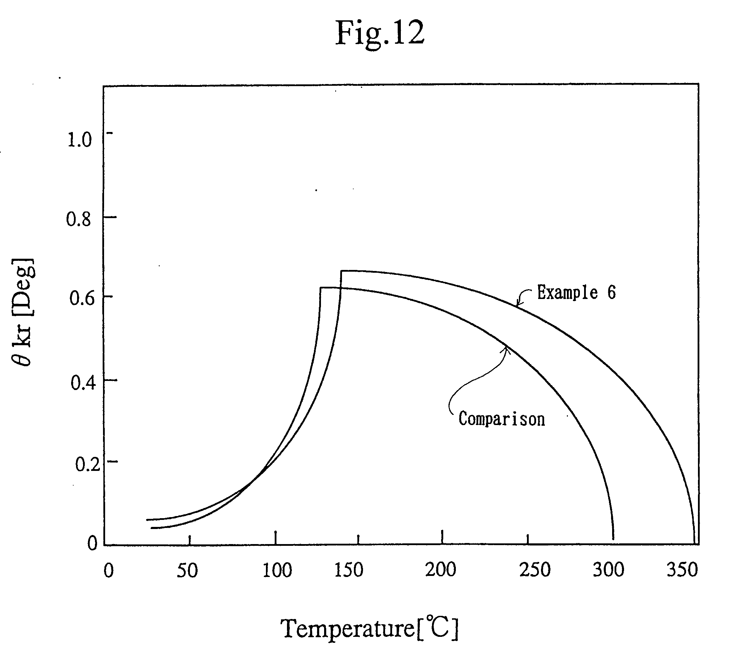

FIG. 12 is a temperature characteristic diagram of the Kerr rotation angle of the comparison example and sixth example.

The temperature at which the reading layer 3 of the magneto-optical recording medium according to the sixth example changes to the perpendicular magnetization layer was 140° C, in other words, the copying temperature of the reading layer 3 was 140° C, and the Curie temperature was 350° C, while the Curie temperature of the comparison example was 300° C.

When the laser beam spot is focused onto the reading layer 3 through the substrate 1 and thereby the temperature of the reading layer 3 is raised to the copying temperature, the direction of the magnetization of the recording layer 4 is copied into the reading layer 3 in such an area that has exceeded the copying temperature. The copying temperature of the reading layer 3 of the sixth example is ca. 140° C. By making use of this phenomenon, the reading of the information of the recording layer 4 is performed in the respective magneto-optical recording media according to the sixth example through the fourteenth example and comparison example.

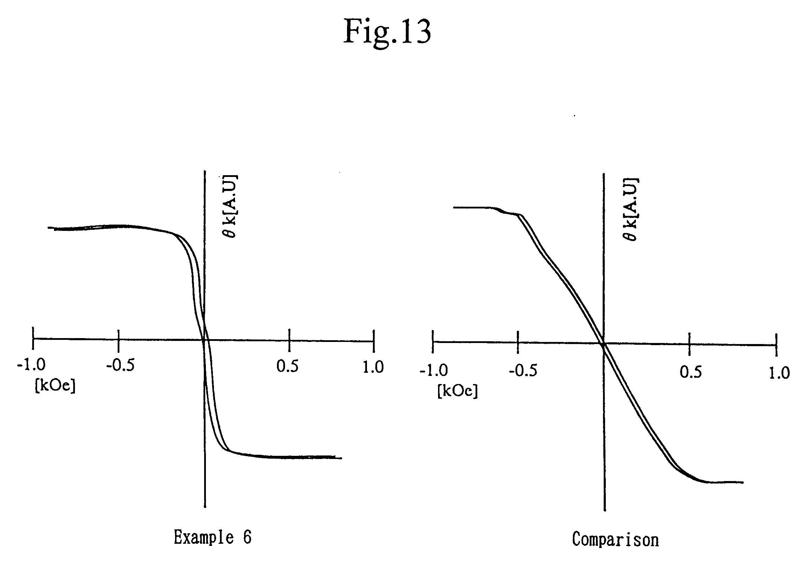

FIG. 13 illustrates the Kerr loop around the Curie temperatures of the sixth example and comparison example.

As illustrated in this figure, the saturation magnetic field of the comparison example at a temperature of 280° C is approximately 500 Oe, while the saturation magnetic field of the sixth example at a temperature of 330° C is approximately 100 Oe. The magnitude of the saturation magnetic field at such a temperature that is slightly lower than the Curie temperature relates to the magnitude of the external magnetic field that is necessary for recording. That is, the larger the magnitude of the saturation magnetic field is, the larger the magnitude of the external magnetic field that is necessary for recordings. For information, the temperature that is slightly lower than the Curie temperature is 330° C for the sixth example, and is 280° C for the comparison example.

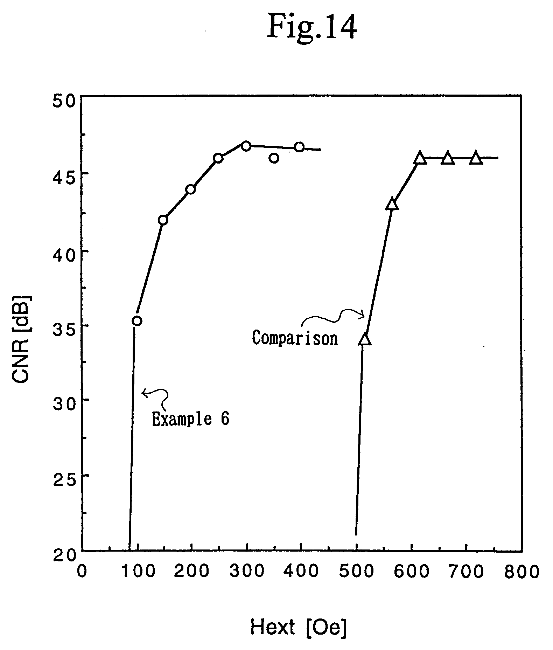

FIG. 14 shows a CNR characteristic of the reading signal of the sixth example and comparison example where the recording is performed by applying a modulated magnetic field. As illustrated in this figure, with the comparison example, unless an external magnetic field of 500 Oe or more was applied, recording was impossible. With the sixth example, however, the CNR could be saturated by applying as small an external magnetic field of ±200 Oe or so, and even if the external magnetic field was as small as ±80 Oe or so, the recording was possible.

In the sixth example, where the relative amounts of Co being a component of the reading layer 3 is changed to more than 50at%, even when the temperature is raised, the reading layer 3 is not changed to the perpendicular magnetization film, and the object of the present invention can not be achieved.

In the sixth example, although the reading layer 3 is composed of GdFeCo, even when the reading layer 3 is composed of a four-component material, such as GdFeCoCr, GdFeCoNi, GdFeCoTi, GdFeCoAl and GdFeCoMn, or a five-component material, such as GdFeCoNiCr and GdFeCoAlTi, the same effect as that of the sixth example can be obtained.

### (6-2-2) Sixth Example to Seventh Example

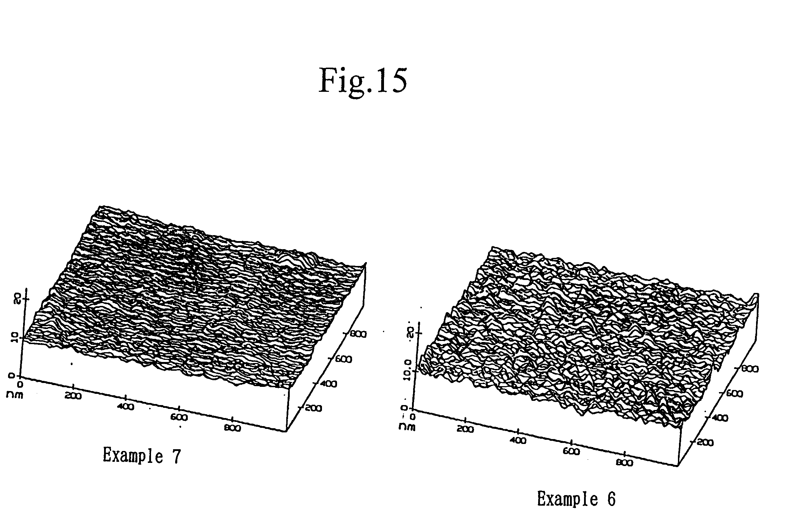

FIG. 15 shows observation views of the surfaces of interference layers (ground layer) 2 of the sixth example and seventh example obtained through an interatomic force microscope (AFM). From this figure, it is understood that the surface of the interference layer 2 of the seventh example is smoother than that of the sixth example. For this reason, the pinning power of the reading layer 3 and recording layer 4 formed on the surfaces smoothed by the backward sputtering type etching processing degrades, facilitating the movement of the magnetic domain walls.

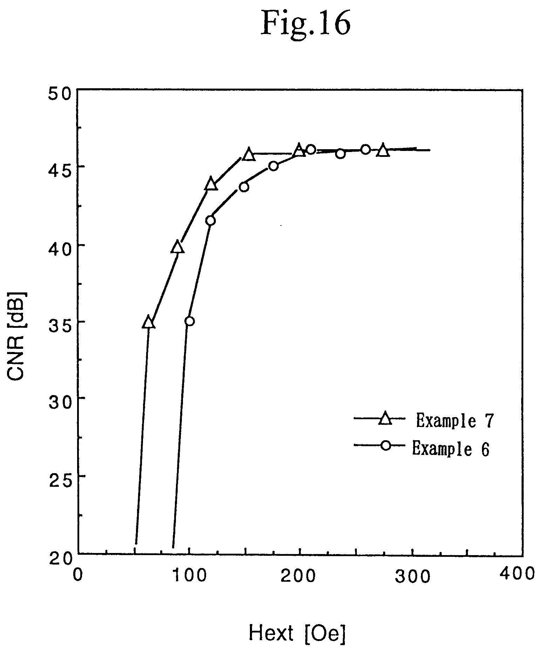

FIG. 16 shows a CNR characteristic of the reading signal of the sixth example and seventh example where the recording is performed by applying a modulated magnetic field. From this figure, it is understood that the sixth example can be recorded from when the external magnetic field is as small as around ±80 Oe, while the seventh example can be recorded from when the external magnetic field is as still small as around ±50 Oe. This is presumably an effect of forming the reading layer 3 after smoothing the surface of the ground layer 2 by etching.

### (6-2-3) Sixth Example to Eighth Example

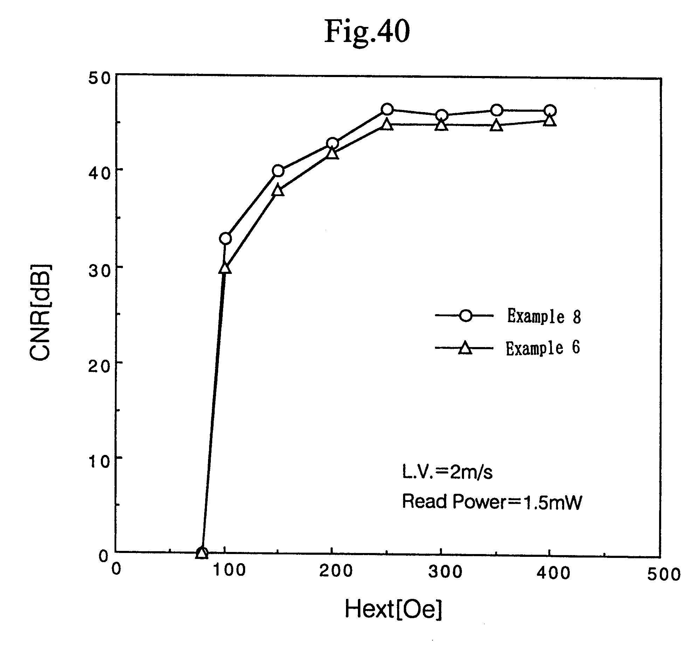

FIG. 40 shows a CNR characteristic of the reading signal of the sixth example and eighth example where the recording is performed by applying a modulated magnetic field. From this figure, it is understood that the eighth example can be recorded from when the external magnetic field is as small as around ±80 Oe as the sixth example can be done so, and in addition to this, the recording characteristics of the eighth example have been further improved. This is presumably an effect of forming the interference layer 2 slightly thinner than that of the sixth example. Incidentally, it was confirmed that when the thickness of the interference layer 2 was within a range of 600 - 800Å, the good recording characteristics could be obtained.

### (6-2-4) Eighth Example to Ninth Example

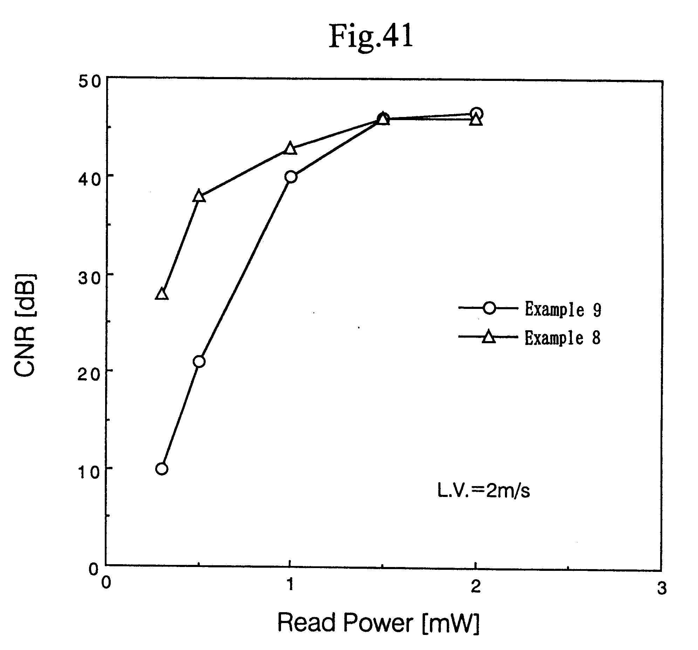

FIG. 41 shows a CNR characteristic of the reading signal of the eighth example and ninth example when the reading laser power is changed. From this figure, it is understood that the CNR of the ninth example steeply changes at around the point when the reading laser power is 1.5mW, which is a better characteristic than that of the eighth example. This is presumably an effect of setting the thickness of the reading layer 3 to 1000Å to be thicker than that of the eighth example. It was confirmed that such effect that the CNR of the reading signal steeply changed at around a certain value of the reading laser power (around 1.5mW for the ninth example) could sufficiently be obtained when the thickness of the reading layer 3 was set to a range of 800 - 1200Å.

### (6-2-5) Ninth Example to Tenth Example

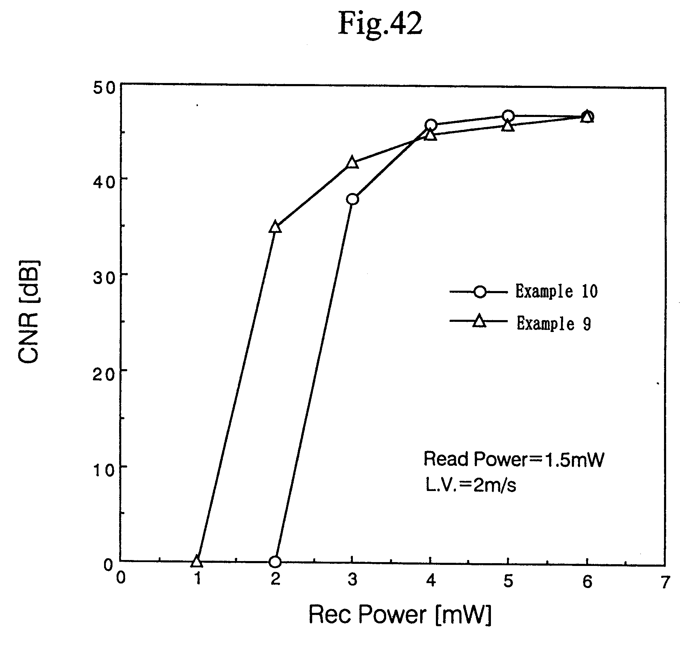

FIG. 42 shows a CNR characteristic of the reading signal of the ninth example and tenth example when the recording laser power is changed. Here, the laser power for the reading is 1.5mW. As illustrated in this figure, in the case of the tenth example in which the relative amounts of Co of the recording layer 4 is different from that of the ninth example, when the recording laser power is smaller than 3mW, which is sufficiently bigger than the reading laser power of 1.5mW, the CNR of the reading signal sufficiently lowers. In the case of the ninth example, however, only when the recording laser power is smaller than 2mW, which is a little bigger than the reading laser power of 1.5mW, the CNR of the reading signal sufficiently lowers. That is, the possibility of an adverse effect on the recorded signal due to the irradiation of the laser beam of the reading power is smaller in the tenth example than the ninth example. This is presumably an effect of setting the relative amounts of Co of the recording layer 4 to be larger in the tenth example than in the ninth example. Incidentally, it was confirmed that such effect could sufficiently be obtained when the component ratio of Co of the recording layer 4 was set to a range of 10 - 16at%.

### (6-2-6) Tenth Example to Eleventh Example

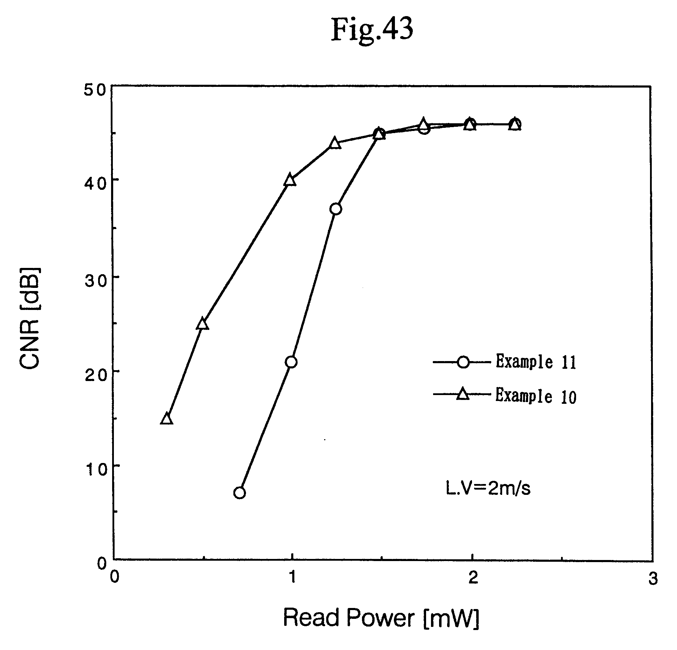

FIG. 43 shows a CNR characteristic of the reading signal of the tenth example and eleventh example when the reading laser power is changed. From this figure, it is understood that the CNR of the eleventh example steeply changes at around the point when the reading laser power is 1.5mW, which is a better characteristic than that of the tenth example. This is presumably an effect of setting the component ratio of Gd of the reading layer 3 to 34at% to be larger than that of the tenth example. It was confirmed that such effect that the CNR steeply changed at around a certain value of the reading laser power (e.g. 1.5mW for the eleventh example) could sufficiently be obtained when the composition of Gd of the reading layer 3 was set to a range of 30 - 36at%.

### (6-2-7) Etching Power

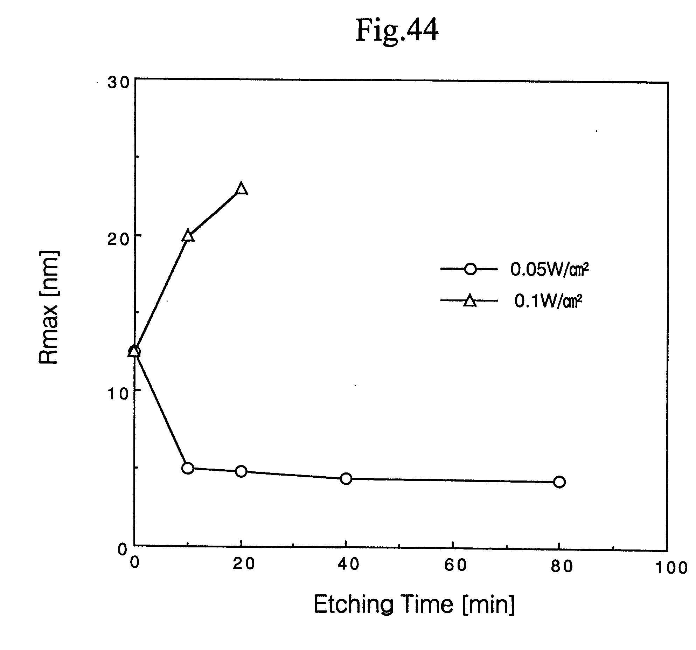

FIG. 44 is a characteristic diagram comparing the surface smoothness by changing the etching power when etching is applied to the surface of the interference layer 2. From this figure, it is understood that when the etching power is 0.05W/cm², a desired smoothness can be obtained by providing etching for 10 minutes or more.

Incidentally, it was confirmed that when the etching power was set to a range of 0.02 - 0.08W/cm², a desired smoothness could be obtained.

### (6-2-8) Eleventh Example to Twelfth Example

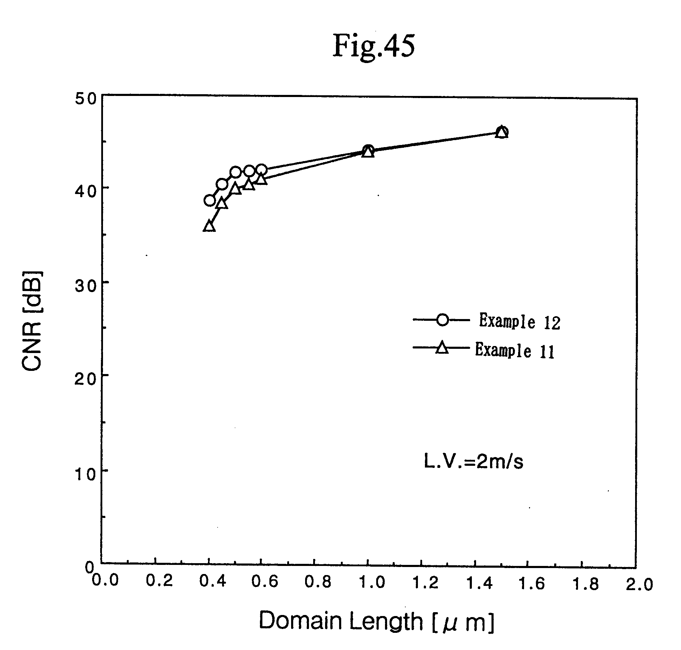

FIG. 45 is a characteristic diagram illustrating the CNR of the reading signal to the recording domain length as to the eleventh example and the twelfth example. As illustrated in this figure, for the twelfth example, even when the recording domain length was still shorter, a good CNR could be obtained. This is presumably because the smoothness of the surface of the interference layer 2 by etching facilitated the movement of the magnetic domain walls, forming more stable domain compared with the eleventh example.

### (6-2-9) Thirteenth Example

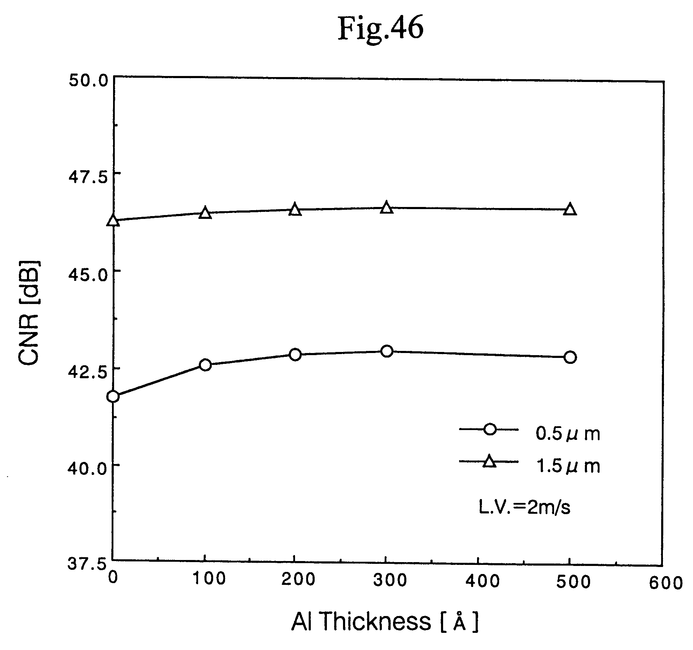

FIG. 46 is a characteristic diagram illustrating the measurements of the CNR of the reading signal to the thickness of an Al radiation layer. Each of the Al radiation layers was provided on the protection layer 5 of the magneto-optical recording medium according to the twelfth example respectively. Here, the recording domain lengths were set to 0.5µm and 1.5µm. From this figure, it is understood that when the thickness of the Al radiation layer is set to a range of 200 - 500Å, a good characteristic can be obtained. Incidentally, the radiation layer of 200Å thick corresponds to the thirteenth example.

### (6-2-10) Eleventh Example to Fourteenth Example

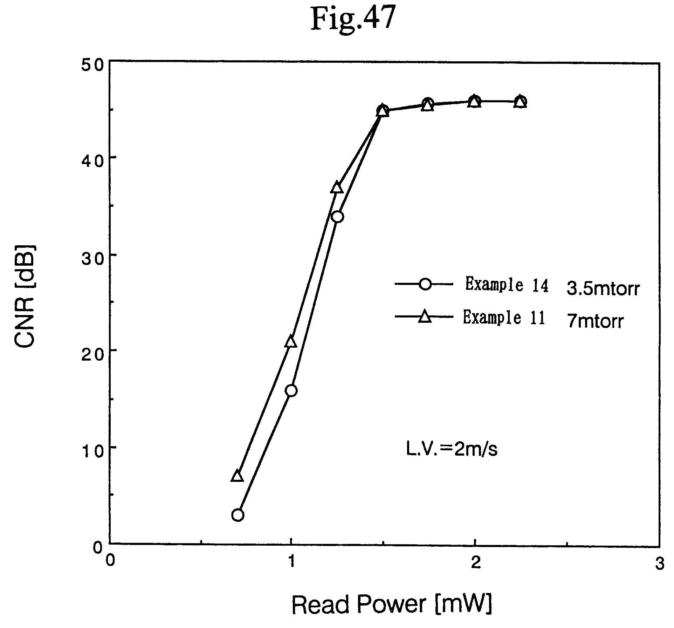

FIG. 47 shows a CNR characteristic of the reading signal of the eleventh example and fourteenth example when the reading laser power is changed. From this figure, it is understood that in both examples, the CNR of the reading signal steeply changes at around the point where the reading laser power is 1.5mW and a good characteristic can be obtained. It was confirmed that such good characteristic could be obtained when the sputtering gas pressure for forming the reading layer 3 was set to a range of 2 - 7 mTorr.

As described above, the effect of the sixth example can be obtained in the same or better shape even when the surface of the interference layer 2 is smoothed by etching with etching power within a range of 0.02 - 0.08W/cm², the thickness of the interference layer 2 is changed within a range of 600 - 800Å, the thickness of the reading layer 3 is changed within a range of 800 - 1200Å, the content of Co being a ingredient of the recording layer 4 is changed within a range of 10 - 16at%, the content of Gd being a ingredient of the reading layer 3 is changed within a range of 30 - 36at%, the Al radiation layer is formed on the protection layer 5 within a thickness range of 200 - 500Å, or the sputtering gas pressure for forming the reading layer 3 is changed within a range of 2 - 7 mTorr.

### (7) Fifteenth Examples

In this example, description will be given to the substrate for the magneto-optical recording medium, recording conditions, etc. with reference to the appended drawings and tables.

The magneto-optical disk according to the present invention have a magnetic layer. The magnetic layer comprises a recording layer and a reading layer. The recording layer is a perpendicular magnetization film and the reading layer is an in-plane magnetization film at the room temperature. The recorded information is read from the magneto-optical disk by irradiating a laser beam of the reading power onto the reading layer. That is, the tempereture of the irradiated arer of the reading layer is raised by the irradiation, and the direction of the magnetization of the recording layer is copied to the reading layer, and the copied direction of the magnetization of the reading layer is read. This type disk is called a super resolution type magneto-optical recording medium. This magneto-optical recording medium can be recorded and reproduced at a high density.

FIG. 17 is a cross-sectional view of an magneto-optical recording medium according to this example. In the construction thereof, an interference layer 42 is formed on a transparent polycarbonate substrate 41, and a deposit of a reading layer 43, a recording layer 44, a protection layer 45, radiation layer 46 and an ultraviolet setting plastic layer 47 on the interference layer 42 in this order.

Firstly, the manufacture of the magneto-optical disk of this example will be described.

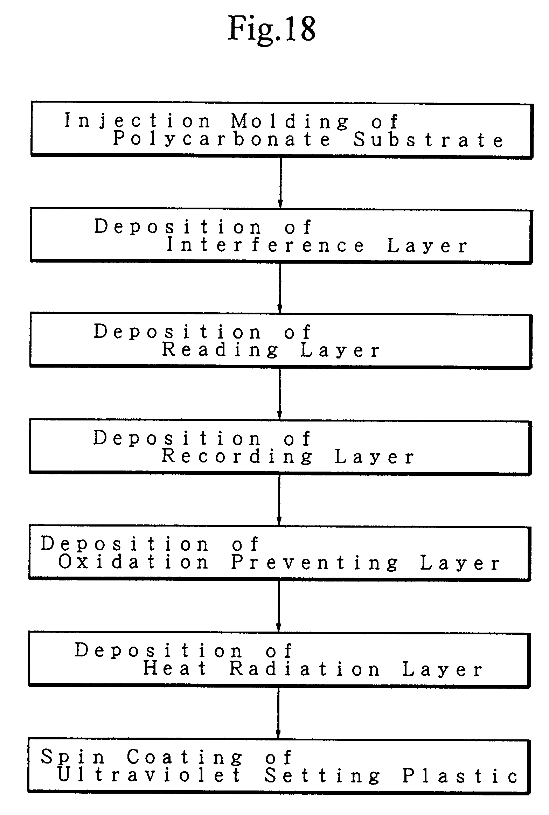

The manufacturing process for the magneto-optical disk according to the present invention is illustrated in FIG. 18. The transparent polycarbonate substrate 41 is injection molded, then SiN is deposited on the transparent polycarbonate substrate 41, and then the SiN is etched by using plasma. Following this, the reading layer 43, etc. are deposited one after another as described above.

In this example, instead of the glass substrate conventionally used as a substrate for the super resolution type magneto-optical recording medium, the polycarbonate substrate is used. Now, the injection molding of the transparent polycarbonate substrate will be described.

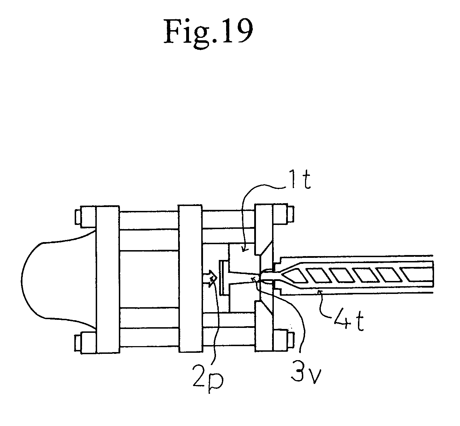

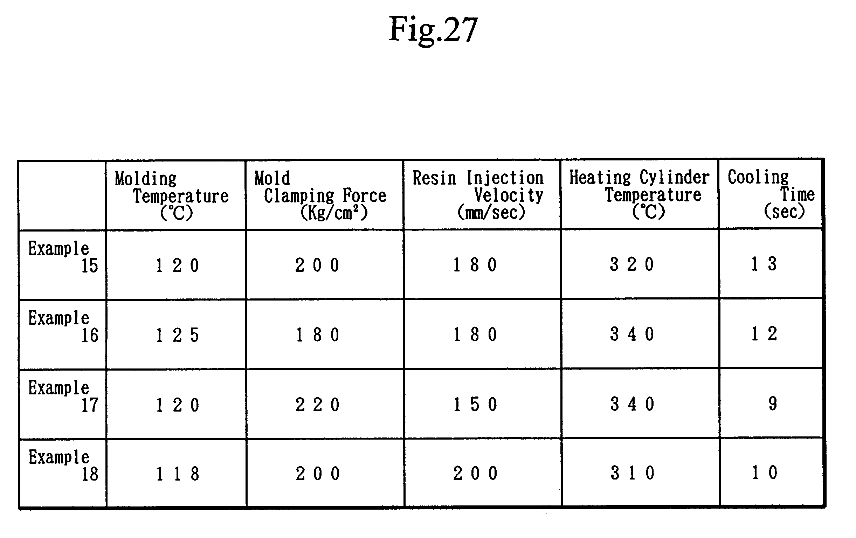

The injection molding of the transparent polycarbonate substrate is largely dependent on mold temperature 1t, mold clamping pressure 2p, resin injection velocity 3v, heating cylinder temperature 4t and cooling time illustrated in FIG. 19. In this embodiment, the track pitches were set to 1.4, 1.2, 1.0 and 0.8µm and the groove to land width ratio was set to 1:1. The injection molding was performed on the conditions of the fifteenth example through the eighteenth example illustrated in FIG. 27, i.e., the molding temperature within a range of 118 - 125° C, the mold clamping force within a range of 180 - 220 kg/cm², the resin injection velocity within a range of 150 - 200 mm/s, the heating cylinder temperature within a range of 310 - 340° C, and the cooling time within a range of 9 - 13 sec.

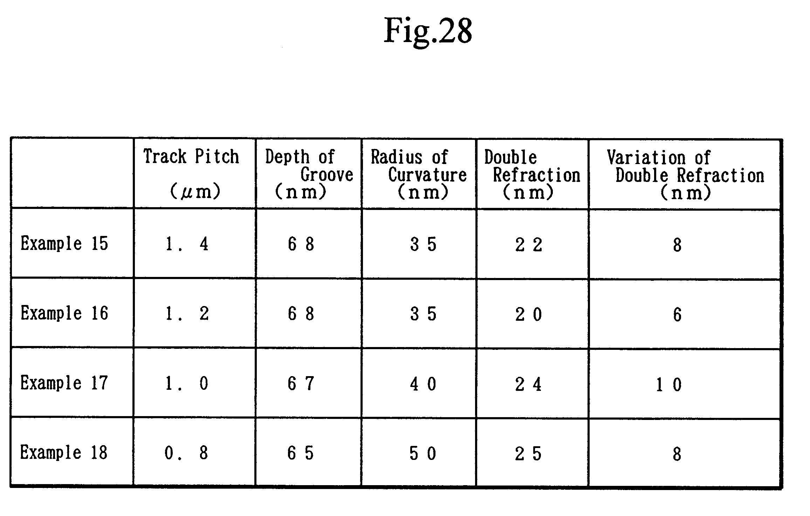

When the copying ratio of the molded substrate was expressed as a ratio of the depth of the groove of the transparent polycarbonate substrate to the depth of the groove of the stamper, high copying ratios of 90% or more could be obtained on all the conditions. The surface conditions of the substrates molded on the respective conditions were measured through an interatomic force microscope (AFM) and the radius of curvature at the corner of the groove and land, etc. was calculated for each example, and the results are shown in FIG. 28.

As a result, the radius of curvature for each track pitch was within a range of 35 - 50nm, the maximum absolute value of the double refraction was within a range of 20 - 25nm, and the variation in the double refraction was within a range of 8 - 10nm, which proves good results. And the surface roughness of the molded polycarbonate substrate was within a range 10 - 50nm, which proves good results. Particularly, for the track pitch of 1.4µm, the radius of curvature was 35nm and the maximum absolute double refraction was 22nm, and the variation in the circumferential direction was 8nm, which proves good results. Here, the double refraction was measured by using He-Ne laser beam with a wavelength of 633nm with a double path.

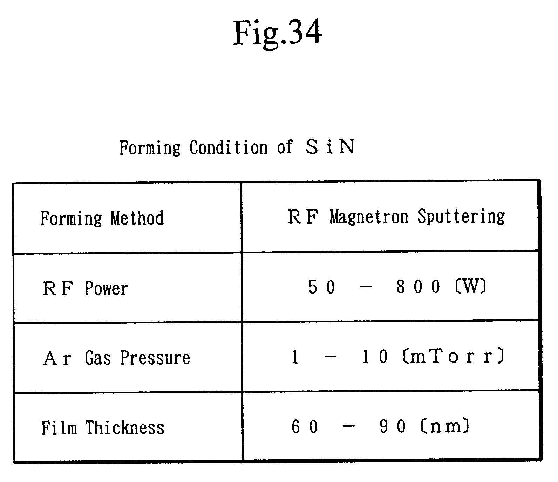

Next, as the interference layer 2, SiN film was deposited on the injection molded polycarbonate substrate to a thickness of 700Å by the RF sputtering method on the conditions illustrated in FIG. 34. Then, after the deposition of the SiN film, the surface of the SiN film was smoothed by the plasma etching, and then GdₓFe_{100-(x+y)}Co_{y} was deposited to a thickness of 1000Å as the reading layer 43, TbₓFe_{100-(x+y)}Co_{y} was deposited to a thickness of 500Å as the recording layer 44, SiN was deposited to a thickness of 800Å as the protection layer 45, Al was deposited to a thickness of 500Å as the radiation layer 46, and the ultraviolet setting plastic was deposited to a thickness of 10µm as the protection film 47.

For the SiN as the interference layer 42, among of all the conditions shown in FIG. 34, the RF power of 500W and Ar gas pressure of 5 mTorr are more preferable.

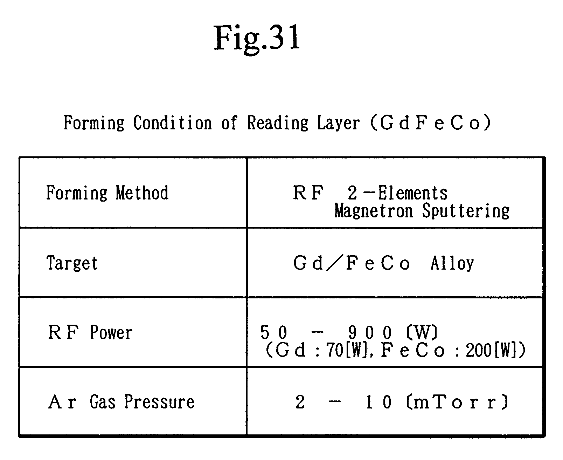

The GdₓFe_{100-(x+y)}Co_{y} as the reading layer 43 was deposited by the RF two-element magnetron sputtering method on the conditions shown in FIG. 31. Among of all the conditions shown in FIG. 31, the RF powers of 70W for Gd and 200W for FeCo and Ar gas pressure of 7 mTorr are more preferable. In the composition of the GdₓFe_{100-(x+y)}Co_{y}, x was within a range of 25 - 35 and y was within the range of 0 - 40, which is suitable to the magneto-optical recording medium according to the present invention. More preferably, however, x should be 30 and y should be 40.

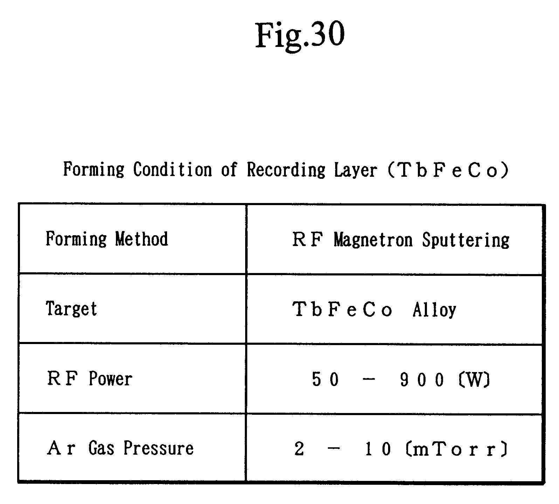

The TbₓFe_{100-(x+y)}Co_{y} as the recording layer 44 was deposited by the RF magnetron sputtering method on the conditions shown in FIG. 30. Among of all the conditions shown in FIG. 30, the RF power of 500W and Ar gas pressure of 5 mTorr are more preferable. In the composition of the TbₓFe_{100-(x+y)}Co_{y}, x was within a range of 15 - 35 and y was within the range of 5 - 30, which is suitable to the magneto-optical recording medium according to the present invention. More preferably, x should be 22.5 and y should be 14.5. The SiN as the protection layer 45 was deposited by the RF magnetron sputtering method on the conditions shown in FIG. 34. Among of all the conditions shown in FIG. 34, the RF power of 500W and Ar gas pressure of 5 mTorr are more preferable.

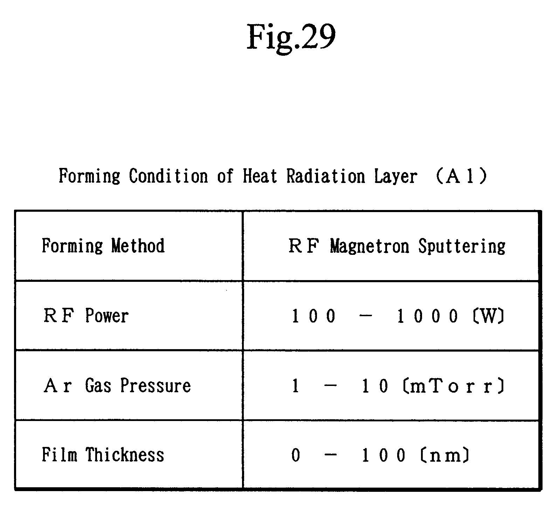

The Al as the radiation layer 46 was deposited by the RF magnetron sputtering method with an Al alloy, such as Al-Ti, Al-Mn and Al-Nb, as the target on the conditions shown in FIG. 29. Among of all the conditions shown in FIG. 29, the RF power of 800W and Ar gas pressure of 5 mTorr are more preferable. In this case, the Al deposition rate is around 100Å/min. The radiation layer 6 of this example should not be limited to Al but Au, Pt, Ti, V, Cr, Mn, Fe, Co, Ni, Cu, Zn, Mo, Ag, Sn, Sb and W may also be used. Furthermore, these element may be used alone or in a form of alloy in any combination.

On the protection layer 45 is formed the ultraviolet setting plastic film 47 by the ordinary method.

Now, the recording and reading of the magneto-optical recording medium manufactured as described above will be described.

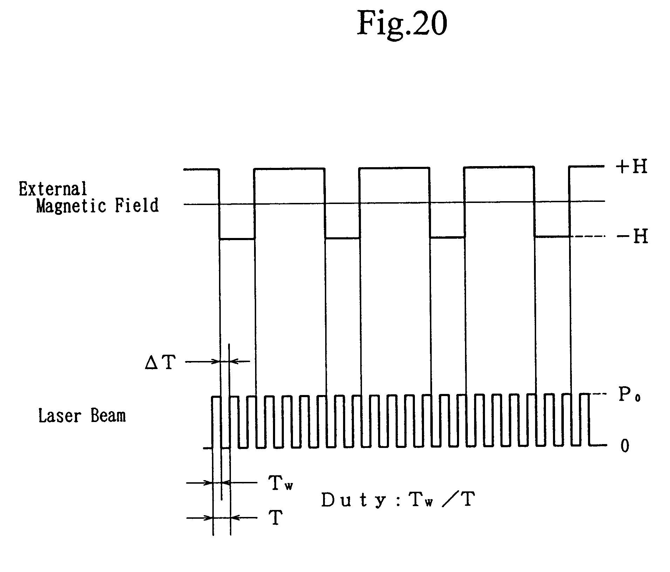

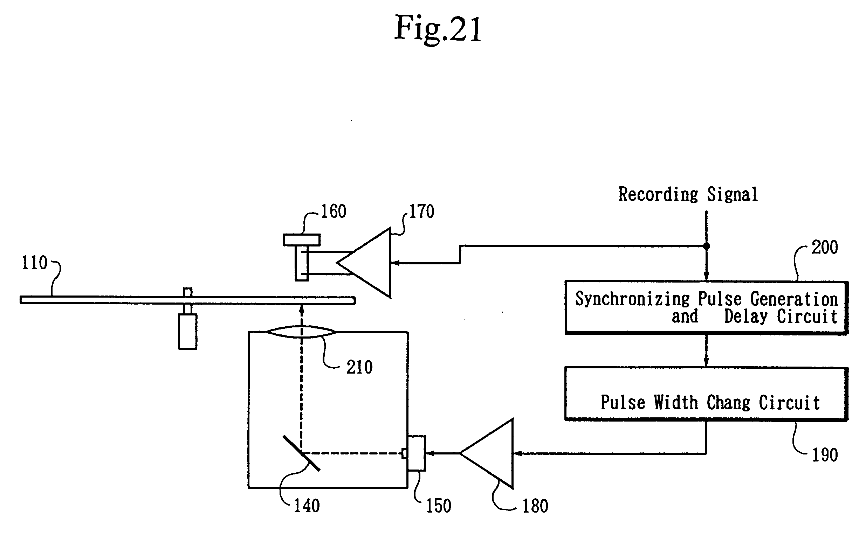

Replacing the conventional recording system with an irradiation of a laser beam of a constant intensity, as illustrated in FIG. 20, the pulse modulation method using pulsatory laser beams was employed. FIG. 21 is a block diagram illustrating a recording apparatus.

The recording signal inputs to a synchronizing pulse generation and phase delay circuit 200, and is converted into a pulse signal with a duty of 50% for synchronization with the recording signal, and then converted into a pulse signal with a phase delayed by 0 - 60ns. This pulse signal inputs to a pulse width change circuit 190, and is converted into a pulse signal with a duty of 20 - 60%, and then inputs to a laser diode driver 180. The laser diode driver 180 turns ON/OFF a laser diode 150 responsive to the pulse signal changed to have a predetermined duty, and thereby the pulse laser beam is irradiated to the magneto-optical recording medium 110 reflected from a mirror 14 and through an objective 210.

The recording signal inputs to a magnetic head driver 170. The magnetic head driver 170 drives the magnetic head 160 responsive to the recording signal, and thereby the recording signal is recorded into the magneto-optical recording medium.

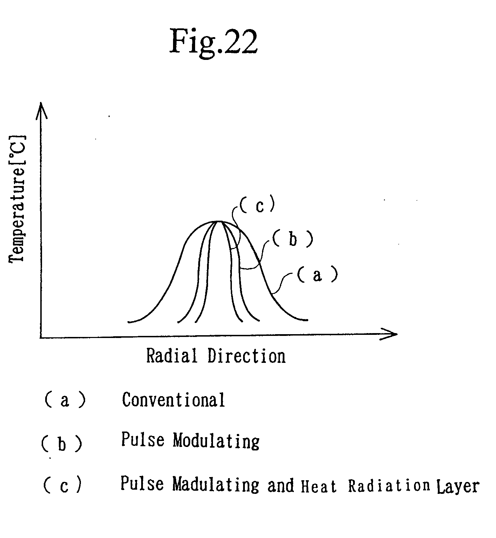

In this embodiment, the laser beam is pulse modulated as described above, accordingly the relations between the external magnetic field corresponding to the recording signal and the pulse laser beam are such that a recording signal is recorded while the laser beam is turned ON twice as illustrated in FIG. 20. Therefore, as qualitatively illustrated in FIG. 22, compared with the conventional method that the recording is performed on condition that the laser beam is irradiated with a constant intensity, the red-hot area of the recording layer is narrower. In FIG. 22, the conventional case is shown as (a) and the embodiment case is shown as (b). The red-hot area means a area where the temperature is raised to the proper level for the recording. In addition to pulse modulating the laser beam , this effect can also be obtained by depositing Al as the radiation layer on the recording layer. Furthermore, by forming the radiation layer and pulse modulating the laser beam, the effect described above becomes further conspicuous, and the red-hot area becomes narrower. This case is shown as (c).

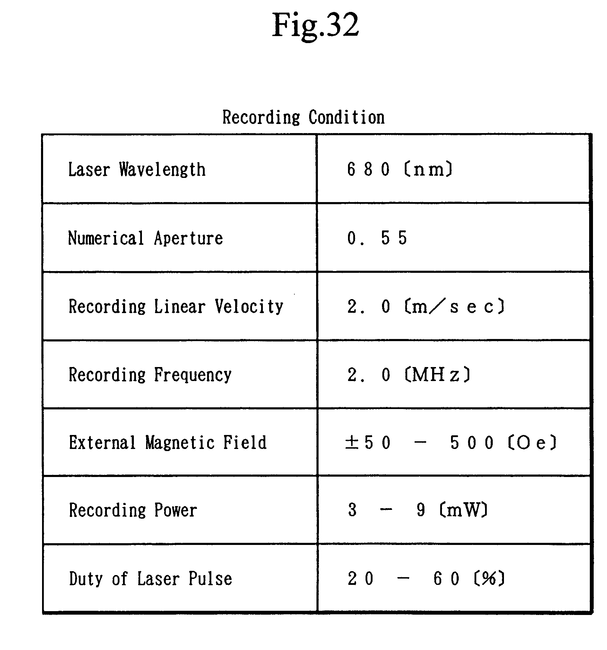

In this embodiment the recording into the magneto-optical recording medium was performed on the conditions shown in FIG. 32. The laser wavelength is 680nm, the numerical aperture of the objective is 0.55, the recording linear velocity is 2.0m/sec, and the recording frequency is 2.0MHz, which are fixed. The external magnetic field, the recording power and optical pulse duty are, among of all the conditions shown in FIG. 32, ±200 Oe, 6mW and 40%, respectively, are preferable.

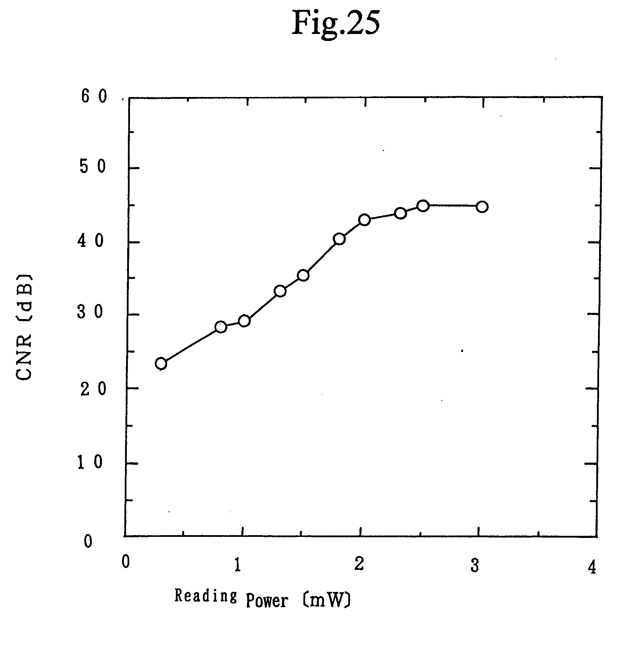

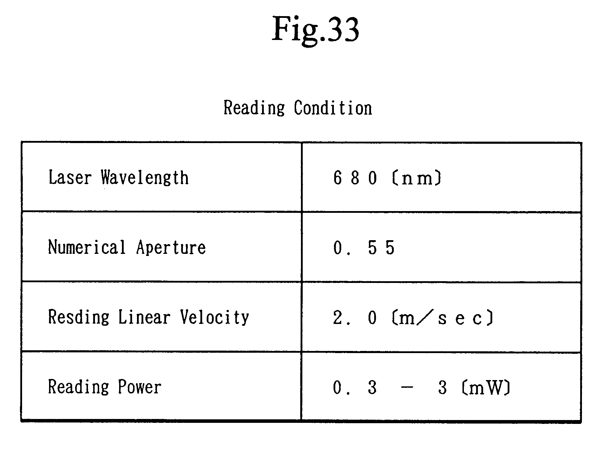

The reading of the magneto-optical recording medium that has performed high-density recording with a domain length of 0.5µm by forming the radiation layer and pulse modulating the laser beam was performed on the conditions shown in FIG. 33. The laser wavelength is 680nm, the numerical aperture of the object lens 210 is 0.55, and the reading linear velocity is 2.0(±0.1)m/sec, which are fixed. The reading power of 2.0mW or more is preferable among of all the conditions shown in FIG. 33. The reading power of 2.0mW or more was selected as a reading power that enabled a high CNR in the relations between the reading power shown in FIG. 25 and the CNR in the reading. That is, according to FIG. 25, the CNR rises as the reading power rises, and an almost constant CNR of 42 - 44dB can be obtained when the reading power is 2.0mW or more. Based on this, the laser power of 2.0mW or more was selected as a reading power that enabled a high CNR. Furthermore, at different reading linear velocities, good reading powers were selected in the same way. As a result, it was found that the reading power within a range of 1.5 - 2.2mW is suitable to the reading linear velocity within a range of 1.1 - 1.3m/sec, the reading power within a range of 1.8 - 2.7mW is suitable to the reading linear velocity within a range of 1.5 - 1.7m/sec, the reading power within a range of 2.4 - 3.7mW is suitable to the reading linear velocity within a range of 2.9 - 3.1m/sec, the reading power within a range of 3.2 - 4.5mW is suitable to the reading linear velocity within a range of 4.9 - 5.1m/sec, and the reading power within a range of 4.0 - 6.0mW is suitable to the reading linear velocity within a range of 8.9 - 9.1m/sec.

These recording conditions are also suitable to the magneto-optical recording media of the first example through the fourteenth example.

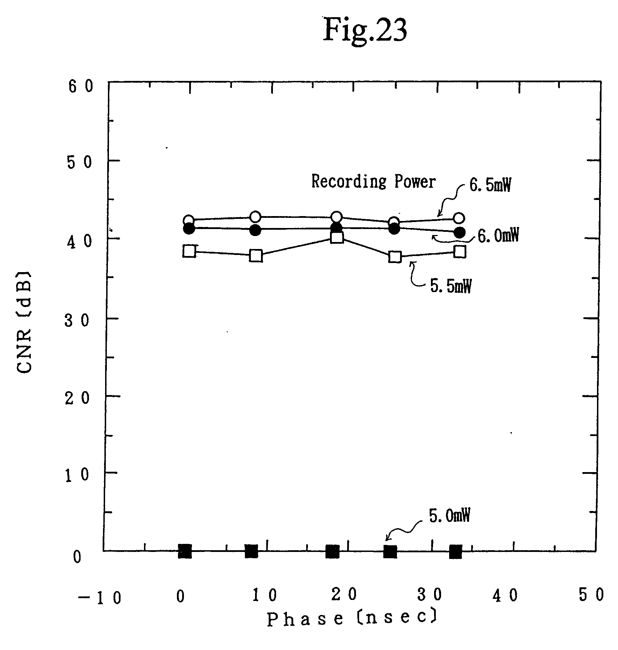

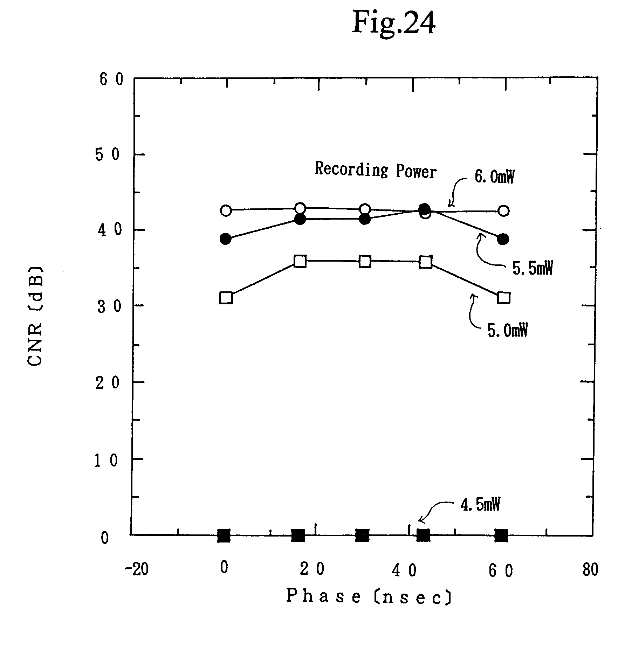

FIGs. 23 and 24 illustrate the reading characteristics of the magneto-optical recording medium for high-density recording. FIG. 23 illustrates the relations between the phase difference (phase difference between the pulse magnetic field and pulse modulated laser beam) in recording and the CNR in reading when the laser wavelength is 680nm, the numerical aperture of the objective 210 is 0.55, the pulse width of the pulse magnetic field is 500nsec, and the number of pulses of the pulse modulated laser beam is 4. As a parameter, the laser power was changed from 5.0 to 5.5, to 6.0 and to 6.5mW. With the phase difference within a range of 0 - 33nsec in recording, when the recording laser power increases from 5.0mW to 5.5mW, the CNR sharply increases from 0 to 37 - 40dB, and when the recording laser power increases from the 5.5mW to 6.5mW, the CNR slowly increases. When the recording laser power was 6.5mW, the CNR of approximately 43dB was obtained.

FIG. 24 illustrates the relations between the phase difference (phase difference between the pulse magnetic field and pulse modulated laser beam) in recording and the CNR in reading when the laser wavelength is 680nm, the numerical aperture of the objective 210 is 0.55, the pulse width of the pulse magnetic field is 500nsec, and the number of pulses of the pulse modulated laser beam is 2. As a parameter, the laser power was changed from 4.5 to 5.0, to 5.5 and to 6.0mW. With the phase difference within a range of 0 - 60nsec in recording, when the recording laser power increases from 4.5mW to 5.0mW, the CNR steeply increases from 0 to approximately 35dB, and when the recording laser power increases from the 5.0mW to 6.0mW, the CNR slowly increases. When the recording laser power was 6.0mW, the CNR of approximately 45dB was obtained.

From the comparison between FIG. 23 and 24, FIG. 24 shows that, by reducing the number of pulses of the laser beam in recording from 4 to 2, the recording laser power can be reduced from 5.5mW to 5.0mW, which indicates a good CNR.

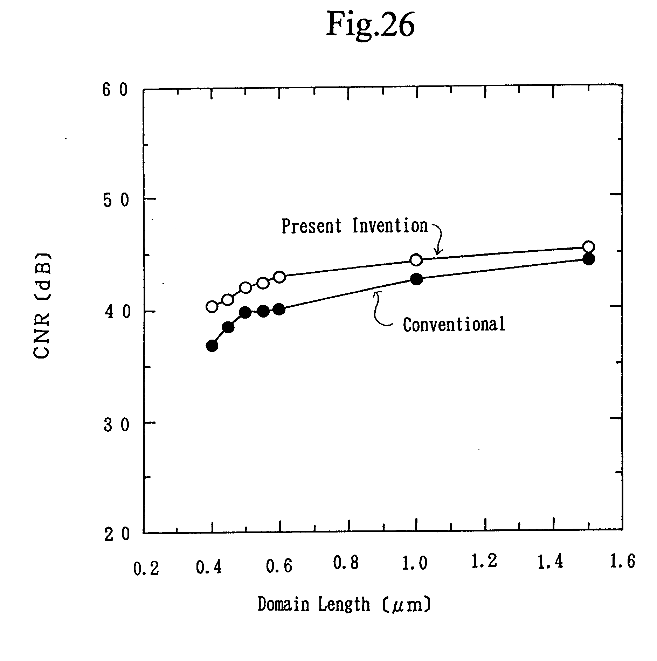

The effect of the radiation layer 46 in reading is evident from the comparison between the prior art and the present invention in the relations between the CNR and the domain length illustrated in FIG. 26. Specifically, when the domain length is within a range of 0.4 - 1.5µm, the CNR in reading rises by approximately 1 - 3sB. As the improvement in the CNR is more evident when the domain length is shorter, even when the domain length is 0.4µm or less, the same results can be obtained. Furthermore, it was found to be effective for the reading of the magneto-optical recording medium with a short domain length (i.e., a high density) to form the radiation layer 46 on the recording layer 44.

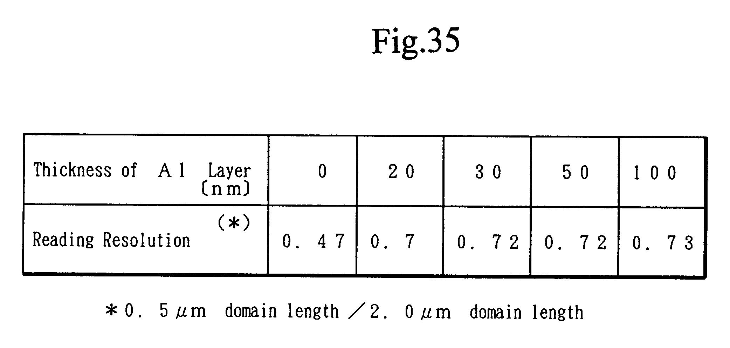

Moreover, the thickness of Al as the radiation layer 46 should not be limited to 500Å, but may be within a range of 200 - 1000Å. This range of film thickness was determined from the relations between the Al thickness and reading resolution shown in FIG. 35, i.e., from the fact that the reading resolution rose as the Al thickness increased and the reading resolution became constant when the Al thickness was 200Å or more.

### (8) Nineteenth Example

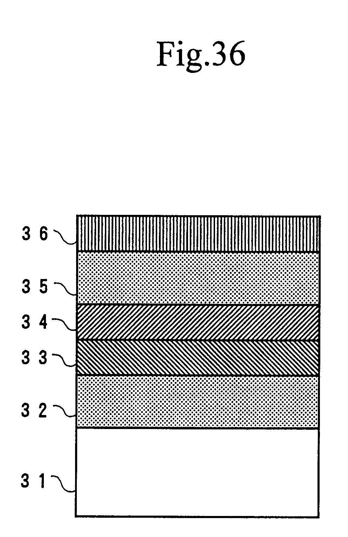

In this example, description will be given to the recording layer 34 of the magneto-optical recording medium by referring to FIGs. 36 through 39 and FIG. 49.

FIG. 36 illustrates a cross-sectional structure of an magneto-optical recording medium of this example. This example was manufactured by using the following procedures. Firstly, on a polycarbonate substrate 31 was formed a SiN layer 32 to a thickness of 800Å by sputtering as a protection film and also for optical enhancement like the ordinary magneto-optical disk. Furthermore, on the SiN layer 32 were formed a Gd₃₀Fe₅₅Co₁₅ 33 to a thickness of 500Å and (Mn₈₀Cr₂₀)₂Sb 34 to a thickness of 1000Å by sputtering. In this sputtering, a complex target composed of Cr and Sb both nounted on Mn chip is used. Then, SiN was formed on the (Mn₈₀Cr₂₀)₂Sb 34 to a thickness of 800Å as a protection layer 35, and further an ultraviolet setting plastic 36 was formed to a thickness of 10µm by spin coating.

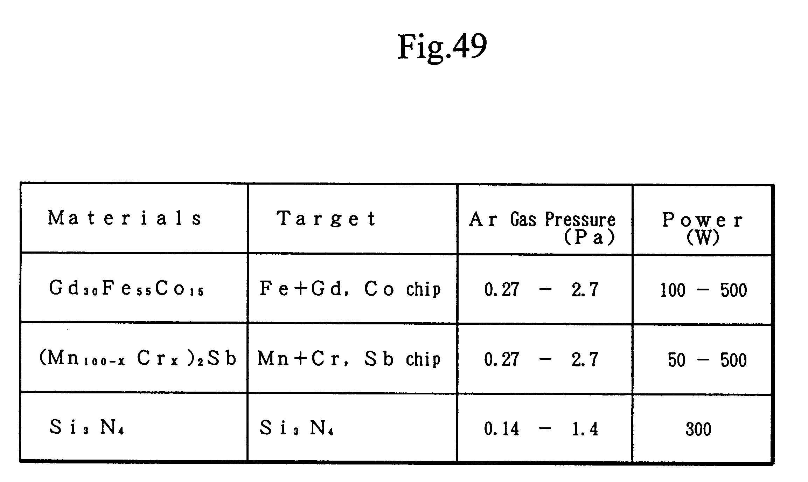

The sputtering conditions for these layers are shown in FIG. 49. Of all the conditions in FIG. 49, it is the most suitable for the formation of the SiN layer 32 when the Ar gas pressure is 0.4Pa and the power supply is 300W, for the formation of the Gd₃₀Fe₅₅Co₁₅ 33 when the Ar gas pressure is 0.67Pa and the power supply is 400W, for the formation of the (Mn₈₀Cr₂₀)₂Sb 34 when the Ar pressure is 0.67Pa and the power supply is 350W, and for the formation of the SiN 35 when the Ar gas pressure is 0.4Pa and the power supply is 300W, respectively. The ultraviolet setting plastic 36 was spin coated only with a dropping quantity of 5cc, a spin condition of 100 rpm and 2 sec for medium velocity and 900 rpm and 3 sec for high velocity, and a exposure time of 5 sec with a halogen lamp of 1kW. The (Mn₈₀Cr₂₀)₂Sb 34 formed as described above is a magnetic film having a transition from antiferromagnetism to ferromagnetism, and the Gd₃₀Fe₅₅Co₁₅ 33 formed as described above is a in-plane magnetic film at the room temperature.

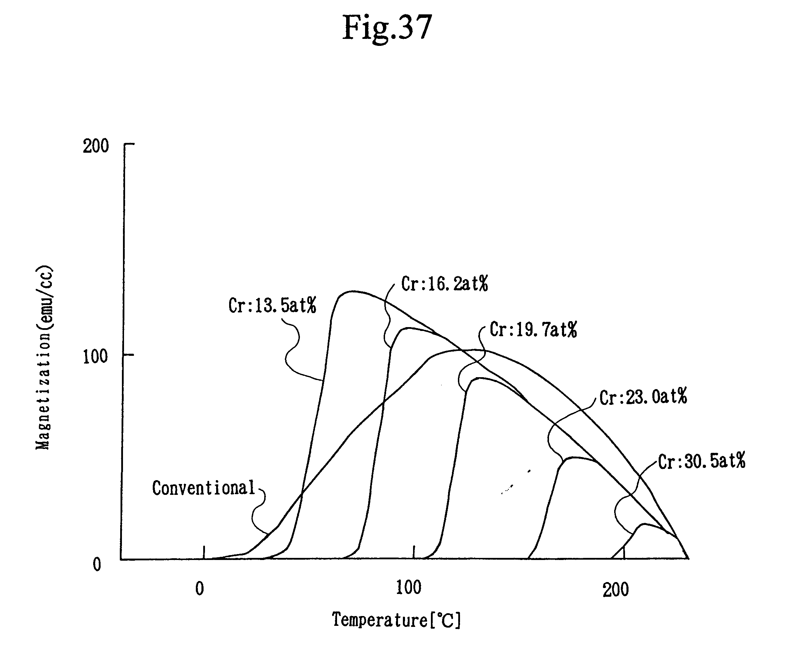

FIG. 37 illustrates the relation between the magnetization of the (Mn₈₀Cr₂₀)₂Sb 34 and its temperature by using the Cr concentration as a parameter. From this figure, it is understood that by the increase in the Cr concentration, the transition point of the (Mn₈₀Cr₂₀)₂Sb 34 from antiferromagnetism to ferromagnetism shifts to the high-temperature side, and after the transition, the magnetization steeply increases. As the rise of this magnetization is steeper than that of the prior art, the (Mn₈₀Cr₂₀)₂Sb 34 has a clear copying temperature within a temperature range of 40 - 200° C and therefore suitable to be a material for the magneto-optical recording medium utilizing the MSR technology.

As a result of checking the Curie temperature of the (Mn₈₀Cr₂₀)₂Sb 34, it was found that the Curie temperature was constantly around 230° C, the recording of the information was performed by heating the medium to 230° C or more, using the laser beam of 780nm in wavelength, and at a track pitch of 1.6µm and a recording linear velocity of 5m/sec.

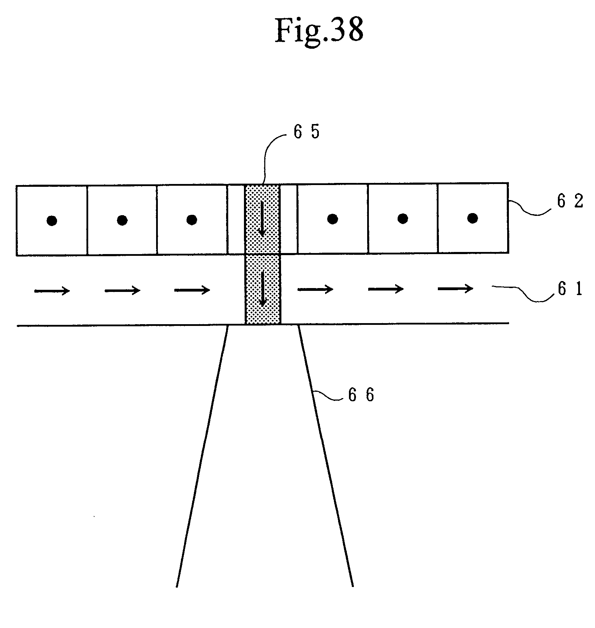

In reading, as the Curie temperature of the (Mn₈₀Cr₂₀)₂Sb 34 is 230° C, it is preferable that the temperature should be around 100° C. In the present invention, the Cr concentration was set to 20at%. As illustrated in FIG. 38, when a reading beam 66 is irradiated to the magneto-optical recording medium, a recording layer 62 is heated, transition from antiferromagnetism to ferromagnetism is caused within the heated area 65, and magnetization occurs. When the magnetization occurs within the recording layer 62, the magnetization is not copied into a reading layer 61, which is an in-plane magnetization film, but the reading layer 61 holds the state of the in-plane magnetization film in this area and functions as a mask. Therefore, the information of only the heated area 65 is reproduced, and the reading in an area smaller than the irradiated beam diameter, i.e., the MSR reading, is possible.

It was found that when the reading laser power was 1.5mW or more, the reading signal steeply appears and the MSR reading was performed. Furthermore, when the reading laser power was 2.5mW, the CNR of the domain length of 0.3µm was 40dB. Accordingly, the information of the recording layer is clearly copied into the reading layer at 100° C or more, and there is no magnetic effect of the (Mn₈₀Cr₂₀)₂Sb 34 on the Gd₃₀Fe₅₅Co₁₅ 33 within any area other than the reading area. Therefore, the mask effect can further be improved, the reading noise can be reduced, the MSR effect can be increased, and the highly uniform MSR reading is now possible.

Furthermore, according to this invention, as illustrated in FIG. 37, when the Cr concentration of the (Mn₈₀Cr₂₀)₂Sb is within a range of 10 - 30at%, the transition from antiferromagnetism to ferromagnetism is clearly caused. Therefore, by applying the (Mn₈₀Cr₂₀)₂Sb having the Cr concentration within this range to the recording layer, the same MSR reading as the above can be achieved.

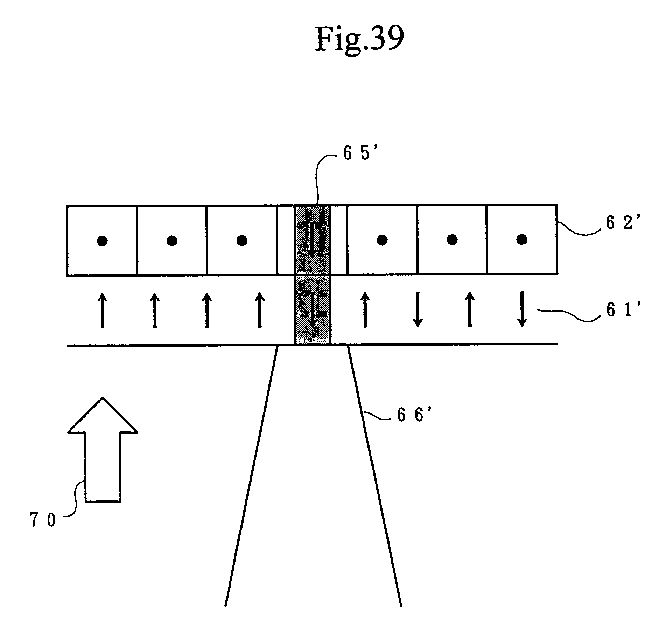

Moreover, in the present invention, the Gd₃₀Fe₅₅Co₁₅, which is an in-plane magnetization film at the room temperature, is used as a reading layer. However, the material should not be limited to the Gd₃₀Fe₅₅Co₁₅, but any material that can copy the magnetization of the recording layer may be used. For example, if an initialization magnetic field, which aligns the magnetization direction of the reading layer, is used, it is possible to use a perpendicular magnetization film, such as TbFe, GdCo, TbCo and TbFeCo. When such material is used, as illustrated in FIG. 39, an initialization magnetic field 70 is applied and thereby the magnetization of a reading layer 61' is oriented to a recording layer 62', aligning the magnetization of the reading layer 61', and then a laser beam 66' is irradiated for reading.

In a high-temperature area 65', as the magnetization occurs within the recording layer 62', the magnetization oriented to the recording layer 62' reverses the direction to be the same as that of the magnetization of the recording layer 62', and thereby the information of the recording layer 62' is copied into the reading layer 61'. Therefore, it is possible to reproduce the information only within the high-temperature area 65'. In addition, if the perpendicular magnetization film with a coercive force of 1 kOe or less is used, the magnetic domain to be copied is demagnetized, and the mask is formed also behind the laser beam, and the MSR reading is now possible.

On the other hand, if the recording layer has the primary transition point, the material for the recording layer should not be limited to (Mn₈₀Cr₂₀)₂Sb, but any magnetic material with Mn₂Sb plus V, Co, Cu, Zn, Ge or As may be used. The compositions of such materials that shows the best results are (Mn₉₃V₇)₂Sb, (Mn₇₅Co₂₅)₂Sb, (Mn₉₀Cu₁₀)₂Sb, (Mn₉₀Zn₁₀)₂Sb, (Mn₉₀Ge₁₀)₂Sb and (Mn₈₀As₂₀)₂Sb.

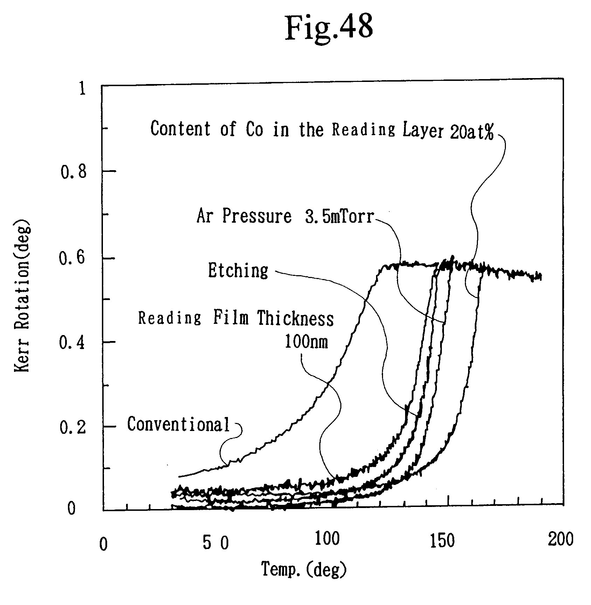

FIG. 48 illustrates the dependence of the Kerr rotation angle on the temperature in the magneto-optical recording media of the examples described above. Each curve in this figure is proportional to T^{c} (T: temperature). From FIG. 48,
1) by setting the thickness of the reading layer to 1000Å;
2) by etching the ground layer;
3) by setting the Co composition of the reading layer to 20at%; and
4) setting the sputtering gas pressure to 3.5 mTorr, each curve steeply rises. The temperature coefficients C of the Kerr rotational angles obtained for the respective curves are 8.99, 9.69, 10.9 and 11.0, respectively. Therefore, in recording and reading by using these magneto-optical recording media, recording and reading with the density higher than the prior art can be achieved.

## Claims

1. A magneto-optical recording medium comprising:
a transparent substrate;
a ground layer formed on the transparent substrate;
a reading layer which is an in-plane magnetization film at the room temperature and formed on the ground layer; and
a recording layer formed on the reading layer for copying a direction of its magnetization into the reading layer by being heated to an inherent temperature thereof;
wherein a temperature coefficient of the Kerr rotation angle is 8.0 or more.

2. The magneto-optical recording medium according to claim 1, wherein the recording layer is a perpendicular magnetization film at the room temperature.

3. The magneto-optical recording medium according to claim 1 or 2, wherein the reading layer is composed of transition metals including Co and rare-earth elements and contents of Co in the reading layer is within a range of 12-50at%.

4. The magneto-optical recording medium according to any of claims 1-3, wherein the reading layer includes Gd and Fe.

5. The magneto-optical recording medium according to any of claims 1-4, wherein the ground layer is formed by depositing SiN which functions as an interference layer to a thickness within a range of 600-800 Å.

6. The magneto-optical recording medium according to any of claims 1-5, wherein the thickness of the reading layer is within a range of 800-1200 Å.

7. The magneto-optical recording medium according to any of claims 1-6, wherein the recording layer is formed by depositing TbFeCo with the Co content within a range of 10-16at%.

8. The magneto-optical recording medium according to any of claims 1-7, wherein the reading layer is formed by depositing GdFeCo with the Gd content within a range of 30-36at%.

9. The magneto-optical recording medium according to any of claims 1-8, wherein the reading layer is formed after the surface of the interference layer is etched by etching power within a range of 0.02 - 0.08 W/cm².

10. The magneto-optical recording medium according to any of claims 1-9, wherein the reading layer is formed by sputtering within an atmosphere with the sputtering gas pressure within a range of 2-7 mTorr.

11. A magneto-optical recording medium according to any of claims 1-10, wherein the transparent substrate is made of polycarbonate.

12. The magneto-optical recording medium according to any of the claims 1-11, wherein the recording layer is formed with TbFeCo, the reading layer is formed with one material selected from among GdFeCo, GdFeCoCr, GdFeCoNi, GdFeCoTi, GdFeCoAl, GdFeCoMn, GdFeCoNiCr, and GdFeCoAlTi.

13. A magneto-optical recording medium according to any of claims 1-12 comprising:
a radiation layer formed on the recording layer.

14. The magneto-optical recording medium according to claim 13, wherein the radiation layer is formed with one or more metals selected from among Al, Au, Pt, Ti, V, Cr, Mn, Fe, Co, Ni, Cu, Zn, Mo, Ag, Sn, Sb and W.

15. The magneto-optical recording medium according to claim 13 or 14, wherein the thickness of the radiation layer is within a range of 200-1000 Å.

16. The magneto-optical recording medium according to claims 13, 14 or 15, wherein the radiation layer is formed by the RF magnetron sputtering method by a power within a range of 100 - 1000 W and under the Ar gas pressure within a range of 1 - 10 mTorr.

17. The magneto-optical recording medium according to any of claims 1-16, wherein the transparent substrate has the double refraction within a range of 20-25nm, the circumferential variation in the double refraction within a range of 6-10nm, and the radius of curvature at a corner of a groove and land within a range of 35-50nm.

18. The magneto-optical recording medium according to any of claims 1-17, wherein the transparent substrate has the surface roughness within a range of 100-500 Å.

19. The magneto-optical recording medium according to any of claims 1-18, wherein the recording layer is a magnetic layer having a transition point from antiferromagnetism to ferromagnetism at a temperature of 50°C or more.

20. The magneto-optical recording medium according to claim 19, wherein the recording layer is formed with (Mn₍₁₀₀₋ₓ₎Mx)₂Sb, where M is a metal selected from among Cr, V, Co, Cu, Zn, Ge and As.

21. The magneto-optical recording medium according to claim 20, wherein the M is Cr, and the X is in a range within 10-30at%.

22. A method of recording a signal onto a magneto-optical recording medium by means of magnetic field modulation, the medium has a transparent substrate, a ground layer formed on the transparent substrate, a reading layer which is an in-plane magnetization film at the room temperature and formed on the ground layer and a recording layer formed on the reading layer for copying a direction of its magnetization into the reading layer by being heated to an inherent temperature thereof, the method comprising the step of:
applying an external magnetic field set to a range of 50-200 Oe.

23. A method of recording a signal onto a magneto-optical recording medium by means of magnetic field modulation, the medium has a transparent substrate, a ground layer formed on the transparent substrate, a reading layer which is an in-plane magnetization film at the room temperature and formed on the ground layer and a recording layer formed on the reading layer for copying a direction of its magnetization into the reading layer by being heated to an inherent temperature thereof, the method comprising the step of:
focusing a laser pulse onto the recording layer through the transparent substrate, the laser pulse having a duty ratio set to a range of 20-60%, and a phase difference between the laser pulse and the magnetic field is set to a range of 0-60nsec.

24. A method of reading a signal from a magneto-optical recording medium, the medium has a transparent substrate, a ground layer formed on the transparent substrate, a reading layer which is an in-plane magnetization film at the room temperature and formed on the ground layer and a recording layer formed on the reading layer for copying a direction of its magnetization into the reading layer by being heated to an inherent temperature thereof, the medium was recorded by focusing a laser pulse onto the recording layer through the transparent substrate, the laser pulse having a duty ratio set to a range of 20-60%, and a phase difference between the laser pulse and the modulated magnetic field is set to a range of 0-60nsec, the method comprising the steps of:
focusing a laser beam onto the reading layer through the transparent substrate, the power of the laser beam is set to a range of 1.5 - 2.2mW when a reading linear velocity is in a range of 1.1 - 1.3m/sec, the power of the laser beam is set to a range of 1.8 - 2.7mW when a reading linear velocity is in a range of 1.5 - 1.7m/sec, the power of the laser beam is set to a range of 2.0 - 3.0mW when a reading linear velocity is in a range of 1.9 - 2.1m/sec, the power of the laser beam is set to a range of 2.4 - 3.7mW when a reading linear velocity is in a range of 2.9 - 3.1m/sec, the power of the laser beam is set to a range of 3.2 - 4.5mW when a reading linear velocity is in a range of 4.9 - 5.1m/sec, the power of the laser beam is set to a range of 4.0 - 6.0mW when a reading linear velocity is in a range of 8.9 - 9.1m/sec.

25. A method of manufacturing a magneto-optical recording medium, the medium has a transparent substrate, a ground layer formed on the transparent substrate, a reading layer being an in-plane magnetization film at the room temperature including Co of 12-50at% and formed on the ground layer and a recording layer formed on the reading layer for copying a direction of its magnetization into the reading layer by being heated to an inherent temperature thereof, the method comprising the steps of:
etching the surface of the interference layer; and
forming the reading layer on the etched surface of the interference layer.

26. The method according to claim 25 wherein the power of the etching is in a range of 0.02 - 0.08W/cm².

27. The method according to any of claims 22-26 wherein the recording layer is formed by depositting TbFeCo onto the reading layer, the content of Co in the composition is in a range of 10-16at%.

28. The method according to any of claims 22-26 wherein the reading layer is formed by depositting GdFeCo onto the recording layer, the content of Gd in the composition is in a range of 30-36at%.

29. The method according to claim 28 or 29 wherein the depositting is performed by sputtering method in an atmosphere of sputtering gas pressure within a range of 2-7 mTorr.
